(19) **Europäisches Patentamt**
**European Patent Office**
**Office européen des brevets**

(11) **EP 4 714 634 A1**

(12) **EUROPEAN PATENT APPLICATION**
published in accordance with Art. 153(4) EPC

(43) Date of publication:
**25.03.2026 Bulletin 2026/13**

(21) Application number: **24811038.9**

(22) Date of filing: **16.05.2024**

(51) International Patent Classification (IPC):
**B29C 59/16** $^{(2006.01)}$     **B29C 59/18** $^{(2006.01)}$
**B32B 7/022** $^{(2019.01)}$     **B32B 27/00** $^{(2006.01)}$

(52) Cooperative Patent Classification (CPC):
**B29C 59/16; B29C 59/18; B32B 7/022; B32B 27/00**

(86) International application number:
**PCT/JP2024/018241**

(87) International publication number:
**WO 2024/242031 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.05.2023 JP 2023083342**

(71) Applicant: **Dai Nippon Printing Co., Ltd.
Tokyo 162-8001 (JP)**

(72) Inventors:
• **SHIMIZU Yuji
Tokyo 162-8001 (JP)**
• **OHKI Hiroaki
Tokyo 162-8001 (JP)**

(74) Representative: **Cabinet Beau de Loménie
103, rue de Grenelle / CS 90800
75340 Paris Cedex 07 (FR)**

(54) **STRETCHABLE FILM AND MULTILAYER BODY PROVIDED WITH SAME**

(57) To provide a stretchable film that can be stretched and used without a reduction in the function of the film itself or the layers formed on the film. A stretchable film having an uneven shape on at least one surface, wherein a tensile elongation at break in a first direction in a plane of the film is more than 20%, the tensile elongation at break in a second direction perpendicular to the first direction is more than 20%, and when a 0.44 mm square area is observed using a white light interference microscope, and a surface roughness measured before stretch is defined as Sa(0), the surface roughness measured after 20% stretch in the first direction is defined as $Sa_1(20)$, and the surface roughness measured after 20% stretch in the second direction is defined as $Sa_2(20)$, a rate of change in surface roughness in the first direction, $\Delta Sa_1$, is -15.0% or less, and the rate of change in surface roughness in the second direction, $\Delta Sa_2$, is -15.0% or less.

[Fig. 1]

## Description

Technical Field

The present invention relates to a stretchable film and a multilayer body comprising the stretchable film.

Background Art

In recent years, with the declining birthrate and aging population and growing health consciousness, interest in home healthcare, telemedicine, preventive medicine, and the like has increased, and the development of biosensors that are worn on the body and continuously monitor biological information is progressing. Examples of such biosensors include wearable devices, smart textiles, patch sensors, skin sensors, and the like. Among these, skin sensors, which are films that can be directly adhered to the body, are expected to become more widespread due to demands for miniaturization and a reduction in wearing discomfort.

Skin sensors come in a variety of forms, including as a small sensor that is placed in contact with the body and then covered with a film, a small sensor that is embedded in a film, and a film that has circuits and electrodes printed on it, so that the film itself is the sensor. Films used in skin sensors need to be able to stretch while being attached to the body, be able to follow the movements of the body, have stretchability that allow the skin sensor to be worn comfortably, and have excellent adhesion to the sensor material.

In recent years, there has been a demand for foldable image display devices equipped with a touch panel, such as smartphones. Further, image display devices that can be deformed, such as by stretching, bending, or twisting, are also being developed. An optical multilayer body arranged in such deformable image display devices may be provided with an anti-glare layer to suppress the reflection of lighting and people in the background, an anti-reflection layer to suppress surface reflections, and a hard coat layer to prevent surface damage. The optical multilayer body used in a deformable image display devices also needs to be durable against deformation.

Patent Literature 1 proposes a resin film as an elastic film suitable for medical films such as skin sensors and films for image display devices.

Films having anti-glare properties are formed by forming a layer with an uneven shape on the surface. Examples of methods for imparting the uneven shape include forming an anti-glare layer containing a binder resin and particles on one surface of a base material, as described in Patent Literature 2, and forming an anti-glare layer by shaping, as described in Patent Literature 3.

Citation List

Patent Literature

PTL 1: JP 2021-116405 A
PTL 2: JP 2015-210273 A
PTL 3: JP 2023-048729 A

Summary of Invention

Technical Problem

Various types of layers may be formed on a stretchable film to impart a function corresponding to an application. The above-described anti-glare layer, anti-reflection layer, hard coat layer, and printed circuit and electrode generally do not possess elasticity themselves. For this reason, when the film is stretched during application or use, cracks or fractures can occur in these layers, resulting in a decrease or loss of function which causes a problem.

Another approach being considered is to incorporate particles into the resin constituting the film to impart anti-glare properties to the resin itself, which has stretchability. However, when the film is stretched, the thickness of the resin portion becomes thinner, and there is a risk of the particles falling off, or if the film is applied to an image display device, haze may increase, making it difficult to see the image.

The present invention has been made in consideration of the above-described problems, and it is an object thereof to provide a stretchable film that can be stretched and used when attached to an adherend without reducing the functions of the film itself or of the layers formed on the film, and a multilayer body that comprises the stretchable film.

Solution to Problem

In order to solve the problems described above, the present invention provides the following <1> to <8>.

<1> A stretchable film having an uneven shape on at least one surface, wherein

a tensile elongation at break in a first direction, which is an arbitrary direction within a plane of the film, is more than 20%, and the tensile elongation at break in a second direction perpendicular to the first direction is more than 20%, when a 0.44 mm square area of the surface having an uneven shape is observed using a white light interference microscope, and a surface roughness measured in accordance with ISO 25178:2012 before stretch is defined as $Sa(0)$, the surface roughness measured in accordance with ISO 25178:2012 after 20% stretch in the first direction is defined as $Sa_1(20)$, and the surface roughness measured in accordance with ISO 25178:2012 after 20% stretch in the second direction is defined as $Sa_2(20)$, a rate of change in surface roughness in the first direction, $\Delta Sa_1$, expressed by the following formula (1), is -15.0% or less, and the rate of change in surface roughness in the second direction, $\Delta Sa_2$, expressed by the following formula (2), is -15.0% or less.

$$\Delta Sa_1 \text{ (unit: \%)} = (Sa_1(20) - Sa(0))/Sa(0) \times 100 \quad (1)$$

$$\Delta Sa_2 \text{ (unit: \%)} = (Sa_2(20) - Sa(0))/Sa(0) \times 100 \quad (2)$$

<2> The stretchable film according to <1>, wherein an absolute value of a difference between $\Delta Sa_1$ and $\Delta Sa_2$, $|\Delta Sa_1 - \Delta Sa_2|$, is 10.0% or less.
<3> The stretchable film according to <1> or <2>, wherein $Sa(0)$ is 0.05 $\mu$m or more and 5.0 $\mu$m or less.
<4> The stretchable film according to any one of <1> to <3>, wherein when 20 non-overlapping 0.06 mm square subareas are arbitrarily selected from a 0.44 mm square observation area observed using a white light interference microscope, and an average value of surface roughness measured in accordance with ISO 25178:2012 of each of the 20 subareas is defined as $Sa'(0)$ and a standard deviation of the surface roughness of the 20 subareas is defined as $\sigma$, a coefficient of variation calculated using the following formula (3) is preferably 10.0% or less.

$$\text{Coefficient of variation} = (\sigma/Sa'(0)) \times 100 \quad (3)$$

<5> The stretchable film according to any one of <1> to <4>, wherein in terms of heights in a 0.44 mm square area of the surface having an uneven shape observed using a white light interference microscope, a maximum peak height is defined as P ($\mu$m), a surface having a height obtained by adding P/6 to the average height is defined as a first reference plane, a number of convex portions higher than the first reference plane is defined as N1, a surface having a height obtained by adding P/3 to the average height is defined as a second reference plane, a number of convex portions higher than the second reference plane is defined as N2, a surface having a height obtained by adding P/2 to the average height is defined as a third reference plane, and a number of convex portions higher than the third reference plane is defined as N3, it is preferable to satisfy the following conditions 1 and 2.

<Condition 1>

$$0.50 \leq N2/N1 \leq 1.50$$

<Condition 2>

$$0.25 \leq N3/N1 \leq 1.00$$

<6> The stretchable film according to <5>, wherein N1 is 500 or more and 10,000 or less.
<7> A multilayer body comprising the stretchable film according to any one of <1> to <6> and an adhesive layer provided on the surface of the film opposite to the surface having an uneven shape.
<8> A multilayer body comprising the stretchable film according to any one of <1> to <6> and a functional layer provided on the surface of the stretchable film having an uneven shape.
<9> A hygiene product comprising the stretchable film according to any one of <1> to <6>.
<10> A cosmetic comprising the stretchable film according to any one of <1> to <6>.
<11> An image display device comprising the stretchable film according to any one of <1> to <6>.

<12> A hygiene product comprising the multilayer body according to <7> or <8>.

<13> A cosmetic comprising the multilayer body according to <7> or <8>.

<14> An image display device comprising the multilayer body according to <7> or <8>.

Advantageous Effects of Invention

The stretchable film of the present invention can be stretched and used when attached to an adherend without reducing the functions of the film itself or of the layers formed on the film.

Brief Description of Drawings

[Fig. 1] Fig. 1 is a cross-sectional schematic diagram of a stretchable film according to one embodiment of this disclosure.

[Fig. 2] Fig. 2 is a scanning electron microscope image of the stretchable film of this disclosure.

[Fig. 3] Fig. 3 is a white light interference microscope image of the stretchable film of Example 1 before stretch.

[Fig. 4] Fig. 4 is a white light interference microscope image of the stretchable film of Example 1 after 20% stretch.

[Fig. 5] Fig. 5 is a cross-sectional schematic diagram showing an example of a multilayer body of this disclosure.

[Fig. 6] Fig. 6 is a cross-sectional schematic diagram showing another example of a multilayer body of this disclosure.

[Fig. 7] Fig. 7 is a cross-sectional schematic diagram showing another example of a multilayer body of this disclosure.

[Fig. 8] Fig. 8 is a photograph showing an example of use of the stretchable film of this disclosure.

[Fig. 9] Fig. 9 is a photograph showing an example of use of an elastic film of this disclosure.

[Fig. 10] Fig. 10 is a schematic diagram of a stretch jig.

[Fig. 11] Fig. 11 is a schematic diagram showing a procedure for preparing a measurement sample in a stretched state.

[Fig. 12] Fig. 12 is a white light interference microscope image of the film of Comparative Example 1 before stretch.

[Fig. 13] Fig. 13 is a white light interference microscope image of the film of Comparative Example 1 after 20% stretch.

[Fig. 14] Fig. 14 is a white light interference microscope image of the film of Comparative Example 2 before stretch.

[Fig. 15] Fig. 15 is a white light interference microscope image of the film of Comparative Example 2 after 20% stretch.

Description of Embodiments

Embodiments of this disclosure will now be described. In this specification, the numerical values indicated by "or more," "or less," and "from ... to" relating to numerical ranges can be arbitrarily combined, and the values in the Examples are values that can be used as the upper and lower limits of the numerical ranges.

The stretchable film of this disclosure is a film having an uneven shape on at least one surface, wherein

a tensile elongation at break in a first direction, which is an arbitrary direction within a plane of the film, is more than 20%, and the tensile elongation at break in a second direction perpendicular to the first direction is more than 20%, when a 0.44 mm square area of the surface having an uneven shape is observed using a white light interference microscope, and a surface roughness measured in accordance with ISO 25178:2012 before stretch is defined as $Sa(0)$, the surface roughness measured in accordance with ISO 25178:2012 after 20% stretch in the first direction is defined as $Sa_1(20)$, and the surface roughness measured in accordance with ISO 25178:2012 after 20% stretch in the second direction is defined as $Sa_2(20)$, a rate of change in surface roughness in the first direction, $\Delta Sa_1$, expressed by the following formula (1), is -15.0% or less, and the rate of change in surface roughness in the second direction, $\Delta Sa_2$, expressed by the following formula (2), is -15.0% or less.

$$\Delta Sa_1 \text{ (unit: \%)} = (Sa_1(20) - Sa(0))/Sa(0) \times 100 \ (1)$$

$$\Delta Sa_2 \text{ (unit: \%)} = (Sa_2(20) - Sa(0))/Sa(0) \times 100 \ (2)$$

The stretchable film of this disclosure has anti-glare properties and further has stretchable due to the uneven shape on at least one surface.

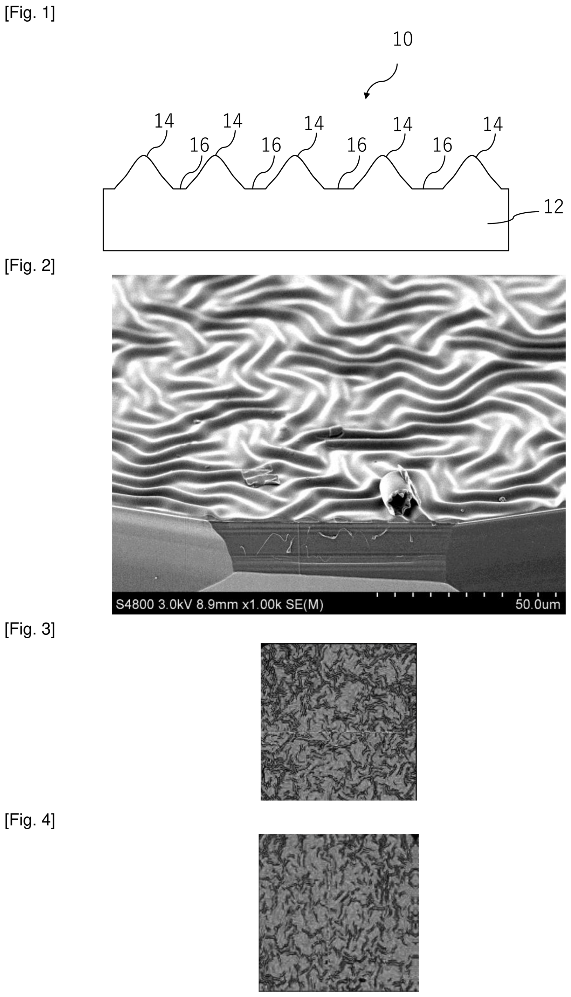

Fig. 1 shows a schematic cross-sectional view of a stretchable film of one embodiment of this disclosure. In Fig. 1, a stretchable film 10 has a single-layer structure of a resin layer 12, in which one surface of the resin layer 12 has an uneven shape formed of a plurality of convex portions 14 and concave portions 16 between the convex portions 14. The resin layer may also have a structure in which a plurality of resin layers are laminated.

[Tensile elongation at break]

In this disclosure, the shape of the stretchable film is not particularly limited and may be polygonal, for example triangular, rectangular, or pentagonal, circular, elliptical, star-shaped, or the like. Regardless of the shape of the stretchable film, an arbitrarily-selected direction in the plane of the unevenly-shaped surface of the stretchable film is defined as a first direction, and a direction perpendicular to the first direction is defined as a second direction. However, if the stretchable film is rectangular, the direction parallel to one of the two perpendicular sides is defined as the first direction, and the direction parallel to the other side is defined as the second direction.

As used herein, "perpendicular" means that the angle between the first direction and the second direction is within a range of 85° to 95°. The angle formed between the first direction and the second direction is preferably within a range of 87° to 93°, more preferably within a range of 89° to 91°, and particularly preferably is 90°.

The tensile elongation at break is measured in accordance with the following procedure.

In accordance with JIS K 7127: 1999, samples having a first tensile direction and samples having a second tensile direction are cut from a single stretchable film. Five samples of each type are prepared. The sample shape is test piece type 2 as described in JIS K 7127: 1999. The sample width is 10 mm and the total length is 100 mm.

A tensile test is performed on each sample using a tensile testing machine (e.g., Tensilon universal material testing machine RTC-1310A) under conditions of an initial chuck distance of 50 mm, a measurement ambient temperature of 23°C, and a test speed of 200 mm/min. The chuck distance (mm) when the sample breaks is obtained from the elongation (mm) measured using software (e.g., MSAT0001V2 Ver. 1.3.6). The tensile elongation at break is calculated using the following formula.

$$\text{Tensile elongation at break } (\%) = (L - L_0)/L_0 \times 100$$

L: Chuck distance at break (mm)
$L_0$: Initial chuck distance (mm)

The average of the measurements of five samples in each of the first and second directions is defined as the tensile elongation at break in the first direction and the tensile elongation at break in the second direction.

The stretchable film of this disclosure is required to have a tensile elongation at break in the first direction of more than 20% and a tensile elongation at break in the second direction of more than 20%. Having a tensile elongation at break of more than 20% in both the first and second directions means that the stretchable film is extensible not just in one direction, but in at least two perpendicular directions in the plane of the film. If the tensile elongation at break is 20% or less in both the first and second directions, the stretchable film itself may break when it is attached to an adherend or when it is used after being attached to an adherend. For example, when used in a skin sensor, the user may feel that the elasticity of the stretchable film is insufficient, and thus is uncomfortable to use. Further, when the stretchable film is used in a foldable image display device, the stretchable film may break when bent. The tensile elongation at break in the first direction and the tensile elongation at break in the second direction are each preferably 30% or more, more preferably 40% or more, and further preferably 50% or more. When considering productivity, handleability, and the like, the tensile elongation at break in the first direction and the tensile elongation at break in the second direction are each preferably 200% or less, more preferably 175% or less, and further preferably 150% or less. That is, embodiments of the numerical range of the tensile elongation at break in the first direction include more than 20% and 200% or less, more than 20% and 175% or less, more than 20% and 150% or less, 30% or more and 200% or less, 30% or more and 175% or less, 30% or more and 150% or less, 40% or more and 200% or less, 40% or more and 175% or less, 40% or more and 150% or less, 50% or more and 200% or less, 50% or more and 175% or less, 50% or more and 150% or less. Embodiments of the numerical range of the tensile elongation at break in the second direction include more than 20% and 200% or less, more than 20% and 175% or less, more than 20% and 150% or less, 30% or more and 200% or less, 30% or more and 175% or less, 30% or more and 150% or less, 40% or more and 200% or less, 40% or more and 175% or less, 40% or more and 150% or less, 50% or more and 200% or less, 50% or more and 175% or less, 50% or more and 150% or less.

In addition, in the stretchable film of this disclosure, when the direction rotated clockwise with respect to the first direction is defined as "+", the direction rotated counterclockwise with respect to the first direction is defined as "-", and the direction rotated approximately +45° with respect to the first direction is defined as a third direction, it is preferable that the tensile elongation at break in the third direction is more than 20%. Further, when the direction rotated approximately -45° with respect to the first direction is defined as a fourth direction, it is preferable that the tensile elongation at break in the fourth direction is more than 20%. As used herein, "approximately +45°" means that the angle between the first direction and the third direction is within a range of 40° to 50°. The angle between the first direction and the third direction is preferably within a range of 42° to 47°, more preferably within a range of 44° to 46°, and particularly preferably is 45°. In addition, as used herein "approximately -45°" means that the angle between the first direction and the fourth direction is within a range of -40° to -50°. The angle between the first direction and the fourth direction is preferably within a range of -42° to -47°, more preferably within a range of -44° to -46°, and particularly preferably is -45°.

For the third and fourth directions as well, by setting the tensile elongation at break to more than 20%, the stretchable film of this disclosure can stretch in any direction within its plane. Further, the tensile elongation at break in the third direction and the tensile elongation at break in the fourth direction are each preferably 30% or more, more preferably 40% or more, and further preferably 50% or more. When considering productivity, handleability, and the like, the tensile elongation at break in the third direction and the tensile elongation at break in the fourth direction are each preferably 200% or less, more preferably 175% or less, and further preferably 150% or less. That is, embodiments of the numerical range of the tensile elongation at break in the third direction include more than 20% and 200% or less, more than 20% and 175% or less, more than 20% and 150% or less, 30% or more and 200% or less, 30% or more and 175% or less, 30% or more and 150% or less, 40% or more and 200% or less, 40% or more and 175% or less, 40% or more and 150% or less, 50% or more and 200% or less, 50% or more and 175% or less, 50% or more and 150% or less. Embodiments of the numerical range of the tensile elongation at break in the fourth direction include more than 20% and 200% or less, more than 20% and 175% or less, more than 20% and 150% or less, 30% or more and 200% or less, 30% or more and 175% or less, 30% or more and 150% or less, 40% or more and 200% or less, 40% or more and 175% or less, 40% or more and 150% or less, 50% or more and 200% or less, 50% or more and 175% or less, 50% or more and 150% or less.

The tensile elongation at break in the third and fourth directions can be measured in the same manner as the tensile elongation in the first and second directions.

[Uneven shape]

The stretchable film of this disclosure has an uneven shape on at least one surface, and when a 0.44 mm square area of the surface having an uneven shape is observed using a white light interference microscope, a rate of change in surface roughness $\Delta Sa_1$ in the first direction is -15.0% or less, and a rate of change in surface roughness $\Delta Sa_2$ in the second direction is -15.0% or less. As used herein, "0.44 mm square area" means a "0.44 mm $\times$ 0.44 mm square area."

In this disclosure, the rate of change in surface roughness $\Delta Sa$ is a value calculated from the surface roughnesses $Sa(0)$, $Sa_1(20)$, and $Sa_2(20)$ measured in accordance with the procedure described in the Examples, which are described later. A white light interference microscope is used to measure the surface roughness. The obtained surface roughness $Sa$ value may vary depending on the field of view used for microscopic observation. Therefore, in this disclosure, the surface roughnesses $Sa(0)$, $Sa_1(20)$, and $Sa_2(20)$ are evaluated over a 0.44 mm square area.

A negative (-) value for the rate of change in the surface roughness $\Delta Sa_1$ and $\Delta Sa_2$ indicates that the change in the surface roughness is such that the convex portions that constitute the uneven shape are lower. In conjunction with the tensile elongation at break described above, when the $\Delta Sa_1$ is -15.0% or less and $\Delta Sa_2$ is -15.0% or less, not only can the stretchable film stretch sufficiently in the first and second directions, which are perpendicular to each other, but the occurrence of strain due to elongation within the stretchable film due to the reduction in height of the convex portions is suppressed. This allows the stretchable film to be stretched while preventing damage such as cracking to the stretchable film itself. Further, even when other layers, such as an anti-reflection layer, a hard coat layer, or a circuit, are provided on the stretchable film, damage such as cracking to these layers can be prevented when the stretchable film is stretched. In contrast, if $\Delta Sa_1$ is more than -15.0% and $\Delta Sa_2$ is more than -15.0%, strain occurs in the film when it is stretched. This makes the film itself more susceptible to damage, resulting in reduced functionality. Further, if other layers are provided on the film, those layers are not able to follow the stretch of the film, making them more susceptible to damage and causing the loss of functionality of those layers.

$\Delta Sa_1$ is preferably -15.5% or less, and more preferably -16.0% or less. Similarly, $\Delta Sa_2$ is preferably -15.5% or less, and more preferably -16.0% or less. To suppress strain generated inside the stretchable film and to ensure the anti-glare properties of the film itself even in an stretched state, as will be described later, $\Delta Sa_1$ is preferably -25.0% or more, more preferably -24.5% or more, and further preferably -24.0% or more. For the same reasons, $\Delta Sa_2$ is preferably -25.0% or more, more preferably -24.5% or more, and further preferably -24.0% or more. That is, embodiments of the numerical range of $\Delta Sa_1$ include -25.0% or more and -15.0% or less, -24.5% or more and -15.0% or less, -24.0% or more and -15.0% or less, -25.0% or more and -15.5% or less, -24.5% or more and -15.5% or less, -24.0% or more and -15.5% or less, -25.0% or more and -16.0% or less, -24.5% or more and -16.0% or less, and -24.0% or more and -16.0% or less. Embodiments of the numerical range of $\Delta Sa_2$ include -25.0% or more and -15.0% or less, -24.5% or more and -15.0% or less, -24.0% or more and -15.0% or less, -25.0% or more and -15.5% or less, -24.5% or more and -15.5% or less, -24.0% or more and -15.5% or less, -25.0% or more and -16.0% or less, -24.5% or more and -16.0% or less, and -24.0% or more and -16.0% or less.

Further, in this disclosure, an absolute value of a difference between $\Delta Sa_1$ and $\Delta Sa_2$, $|\Delta Sa_1 - \Delta Sa_2|$, is preferably 10.0% or less. When the absolute value of the difference is within the above range, the stretchable film of this disclosure has small anisotropy in elongation and can stretch approximately uniformly in the first and second directions. $|\Delta Sa_1 - \Delta Sa_2|$ is more preferably 8.0% or less, further preferably 6.0% or less, and particularly preferably 0%.

The stretchable film of this disclosure has an uneven shape on at least one surface, which gives the film itself anti-glare properties. To achieve good anti-glare properties, the surface roughness Sa(0) is preferably 0.05 $\mu$m or more, more preferably 0.1 $\mu$m or more, and further preferably 0.2 $\mu$m or more. Further, to improve coverage when coating another layer on the surface having an uneven shape, and to facilitate the wiping off of dirt and other contaminants that have adhered to the surface having an uneven shape, the surface roughness Sa(0) is preferably 5.0 $\mu$m or less, more preferably 4.0 $\mu$m or less, and further preferably 3.0 $\mu$m or less. That is, embodiments of the numerical range of the surface roughness Sa(0) include 0.05 $\mu$m or more and 5.0 $\mu$m or less, 0.1 $\mu$m or more and 5.0 $\mu$m or less, 0.2 $\mu$m or more and 5.0 $\mu$m or less, 0.05 $\mu$m or more and 4.0 $\mu$m or less, 0.1 $\mu$m or more and 4.0 $\mu$m or less, 0.2 $\mu$m or more and 4.0 $\mu$m or less, 0.05 $\mu$m or more and 3.0 $\mu$m or less, 0.1 $\mu$m or more and 3.0 $\mu$m or less, and 0.2 $\mu$m or more and 3.0 $\mu$m or less.

The stretchable film of this disclosure preferably also has anti-glare properties even in a stretched state. To facilitate good anti-glare properties even in an stretched state of the stretchable film, the surface roughness $Sa_1(20)$ is preferably 0.05 $\mu$m or more, more preferably 0.1 $\mu$m or more, and further preferably 0.2 $\mu$m or more. The surface roughness $Sa_2(20)$ is preferably 0.05 $\mu$m or more, more preferably 0.1 $\mu$m or more, and further preferably 0.2 $\mu$m or more. Further, to facilitate the wiping off of dirt and other contaminants that have adhered to the surface having an uneven shape, the surface roughness $Sa_1(20)$ is preferably 4.0 $\mu$m or less, more preferably 3.2 $\mu$m or less, and further preferably 2.4 $\mu$m or less. The surface roughness $Sa_2(20)$ is preferably 4.0 $\mu$m or less, more preferably 3.2 $\mu$m or less, and further preferably 2.4 $\mu$m or less. That is, embodiments of the numerical range of the surface roughness $Sa_1(20)$ include 0.05 $\mu$m or more and 4.0 $\mu$m or less, 0.1 $\mu$m or more and 4.0 $\mu$m or less, 0.2 $\mu$m or more and 4.0 $\mu$m or less, 0.05 $\mu$m or more and 3.2 $\mu$m or less, 0.1 $\mu$m or more and 3.2 $\mu$m or less, 0.2 $\mu$m or more and 3.2 $\mu$m or less, 0.05 $\mu$m or more and 2.4 $\mu$m or less, 0.1 $\mu$m or more and 2.4 $\mu$m or less, and 0.2 $\mu$m or more and 2.4 $\mu$m or less. Embodiments of the numerical range of the surface roughness $Sa_2(20)$ include 0.05 $\mu$m or more and 4.0 $\mu$m or less, 0.1 $\mu$m or more and 4.0 $\mu$m or less, 0.2 $\mu$m or more and 4.0 $\mu$m or less, 0.05 $\mu$m or more and 3.2 $\mu$m or less, 0.1 $\mu$m or more and 3.2 $\mu$m or less, 0.2 $\mu$m or more and 3.2 $\mu$m or less, 0.05 $\mu$m or more and 2.4 $\mu$m or less, 0.1 $\mu$m or more and 2.4 $\mu$m or less, and 0.2 $\mu$m or more and 2.4 $\mu$m or less.

In the stretchable film of this disclosure, when 20 non-overlapping 0.06 mm square subareas are arbitrarily selected from a 0.44 mm square observation area observed using a white light interference microscope, and an average value of surface roughness measured in accordance with ISO 25178:2012 of each of the 20 subareas is defined as Sa'(0) and a standard deviation of the surface roughness of the 20 subareas is defined as $\sigma$, a coefficient of variation calculated using the following formula (3) is preferably 10.0% or less.

$$\text{Coefficient of variation} = (\sigma/Sa'(0)) \times 100 \quad (3)$$

The coefficient of variation $\sigma/Sa'(0)$ is an index that indicates the degree of unevenness on the surface having an uneven shape. A small $\sigma/Sa'(0)$ indicates a more uniform distribution of unevenness on the surface having an uneven shape. When $\sigma/Sa'(0)$ is 10.0% or less, unevenness is more uniformly distributed within the surface, it is easier for the stretchable film to stretch in the first and second directions, and the tensile elongation at break in the first and second directions, as well as $\Delta Sa_1$ and $\Delta Sa_2$, tend to fall within the ranges described above. As a result, it is easier to stretch the stretchable film in the first and second directions. More preferably, $\sigma/Sa'(0)$ is 9.0% or less, and further preferably 8.5% or less. The lower limit value of $\sigma/Sa'(0)$ is preferably 1.0% or more to prevent the stretchable film from appearing glossy when observed from different angles.

In the stretchable film of this disclosure, when in terms of heights in a 0.44 mm square area of the surface having an uneven shape observed using a white light interference microscope, a maximum peak height is defined as P ($\mu$m), a surface having a height obtained by adding P/6 to the average height is defined as a first reference plane, a number of convex portions higher than the first reference plane is defined as N1, a surface having a height obtained by adding P/3 to the average height is defined as a second reference plane, a number of convex portions higher than the second reference plane is defined as N2, a surface having a height obtained by adding P/2 to the average height is defined as a third reference plane, and a number of convex portions higher than the third reference plane is defined as N3, it is preferable to satisfy the following conditions 1 and 2.

<Condition 1>

$$0.50 \leq N2/N1 \leq 1.50$$

<Condition 2>

$$0.25 \leq N3/N1 \leq 1.00$$

N2/N1 and N3/N1 are indicators of the variation in the height of the convex portions. An N2/N1 and N3/N1 ratio of 1 indicates that the height of the convex portions is not biased toward a specific height. When conditions 1 and 2 are met, this means an uneven shape with a more uniform convex portion height to be formed, which helps prevent stress from concentrating at convex portions of specific heights. For this reason, the tensile elongation at break in the first and second directions, as well as $\Delta Sa_1$ and $\Delta Sa_2$, tend to satisfy the above-mentioned ranges. As a result, it is easier to stretch the stretchable film in the first and second directions. Further, by satisfying conditions 1 and 2, good anti-glare properties tend to be achieved. In addition, when the stretchable film of this disclosure is used by adhering it to the body, the glossiness of the stretchable film is suppressed, making it less noticeable.

The lower limit value of N2/N1 is more preferably 0.60 or more, and further preferably 0.80 or more. The lower limit value of N3/N1 is more preferably 0.30 or more, and further preferably 0.35 or more.

In the stretchable film of this disclosure, N1 is preferably 500 or more and 10,000 or less. When N1 satisfies this range, a sufficient number of convex portions are present within a predetermined area, and so the tensile elongation at break in the first and second directions tends to satisfy the above ranges. Further, when N1 satisfies this range, good anti-glare properties tend to be achieved. More preferably, N1 is 1,000 or more and 8,000 or less, more preferably 1,000 or more and 6,000 or less, further preferably 2,000 or more and 6,000 or less, and further preferably 2,000 or more and 5,000 or less.

Further, in the stretchable film of this disclosure, N2 is preferably 500 or more and 10,000 or less, more preferably 1,000 or more and 8,000 or less, further preferably 1,500 or more and 5,000 or less, and still further preferably 2,000 or more and 5,000 or less. In addition, N3 is preferably 300 or more and 5,000 or less, more preferably 500 or more and 4,000 or less, and further preferably 1,000 or more and 3,000 or less.

[Uneven surface shape]

Fig. 2 shows a scanning electron microscope image of the uneven surface of the stretchable film in one embodiment of this disclosure. Fig. 2 is an image capturing the uneven surface obliquely from above. The observation specimen was obtained by attaching the surface of the stretchable film opposite the observation surface to a resin plate (made of polyvinyl chloride) via an adhesive (adhesive containing $\alpha$-cyanoacrylate), and then cutting a cross section of the specimen. In addition to the uneven surface shape of the stretchable film, Fig. 2 also shows the cross section of the film, the adhesive layer, and the resin plate.

Figs. 3 and 4 show white light interference microscope photographs of a surface having an uneven shape in one embodiment (Example 1) of the stretchable film of this disclosure. Fig. 3 shows the image before stretch, and Fig. 4 shows the image after 20% stretch in the vertical direction of the image. It is noted that Figs. 3 and 4 are images of a 0.44 mm square observed under the conditions described in the Examples below.

The stretchable film of this disclosure preferably has an uneven shape resulting from minute wrinkles. The wrinkles are composed of a plurality of convex portions and concave portions located between the plurality of convex portions. The convex portions are curved or meandering lines when viewed in a plane (i.e., when viewed from a direction approximately perpendicular to the surface having an uneven shape). When viewed in a plane, the shapes of the individual convex portions are different from each other. Moreover, the convex portions are not parallel to each other, but are arranged in an intricate manner such that the plurality of convex portions are folded overlapping, for example, a portion of an adjacent convex portion entering the curved portion of one convex portion. Therefore, it cannot be said that the convex portions have a shape that follows a certain rule, or that they are arranged according to a certain rule. Similarly, it cannot be said that the concave portions located between the convex portions have a shape that follows a certain rule. The surface of the stretchable film of this disclosure preferably has a shape in which a plurality of linear convex portions are arranged irregularly and densely.

Comparing Fig. 3 and Fig. 4, it can be seen that the number of convex portions is decreased after stretch compared with before stretch.

As used herein, "curved" means that, in planar view, there is one or more places where the stretch direction of the continuous linear convex portions reverses from one side to the other. An example of a section where the stretch direction reverses from one side to the other is a form that has an inflection point when the linear convex portions are approximated by a continuous curve when the width of the linear convex portions in planar view is ignored (when the width in planar view is considered to be 0). Another example is a form having a section that is approximated by a V-shaped folded line or two sides of a triangle that sandwich one vertex, when the width of the linear convex portions in planar view is ignored.

Further, "meandering" means that there are at least two places where the stretch direction of continuous linear convex portions reverses from one side to the other in planar view (hereinafter also referred to as "reversed sections"), and that when proceeding in the stretch direction of the linear convex portions, there are sections where the stretch direction of the linear convex portions reverses alternately in opposite directions at two adjacent places. For example, when the linear convex portions are approximated by a continuous curve when the width of the linear convex portions in planar view is ignored, the form may have a section that is approximated by the letter "S." As another example, when the linear convex portions are approximated by a straight line when the width of the linear convex portions in planar view is ignored, the form may have a section that is approximated by the letter "W."

In addition, the convex portions in this disclosure may have a branched section. Such a form can be considered to be a form in which two or more linear convex portions are connected and integrated. For example, one example is a form in which the end or middle of one linear convex portion is integrated so as to connect with the middle of another linear convex portion. Examples of branched forms include shapes approximated by the letters "T" and "Y," and dendritic shapes such as dendrimers.

The convex portions are defined as, in an image obtained using a white light interference microscope, the areas that have a height equal to or more than the first reference plane defined above, i.e., a plane whose height is the average height plus $P/6$ ($P$ is the maximum peak height ($\mu$m)). Further, the concave portions are defined as the areas below the first reference plane.

When a stretchable film having wrinkles with the above-described shape is stretched in the plane direction (the first and second directions described above), not only does the material itself stretch, but the wrinkles also unfold, lowering the height of the convex portions, and hence it is even easier for the film to stretch. By having a shape in which a plurality of linear convex portions are irregularly and densely arranged, there is ample room for the wrinkles to unfold in the plane direction. Therefore, a stretchable film having the above-described surface shape can easily satisfy the tensile elongation at break, $\Delta Sa_1$, and $\Delta Sa_2$ ranges described above. Because the wrinkles can stretch more easily as a result of unfolding, the stretchable film is less susceptible to the occurrence of large strain than in a case where no wrinkles are formed. As a result, cracks and other damage can be prevented during stretch, and the functions of the stretchable film itself can be maintained. For example, by having an uneven shape as shown in Fig. 2, the stretchable film itself has anti-glare properties, and the uneven shape is maintained to some extent even after the stretchable film is stretched, allowing the anti-glare properties to be maintained. Further, even if other layers are provided on the stretchable film, damage such as cracking to those layers can be prevented when the stretchable film is stretched. As a result, the performance of those layers can be maintained even after the stretchable film is stretched.

By forming a plate or shaped sheet using methods such as sandblasting or solvent treatment, it is possible to create a film having a surface shape in which a plurality of convex portions are arranged irregularly and densely. However, in films imparted with an uneven shape using the above-described methods, the stretching does not occur through the spreading of the convex portions, but rather the amount of stretching is mainly due to the material of the film. Further, because the concave portions, which correspond to the thin parts of the film, are more stretchable than the convex portions, it is difficult to reduce the height of the convex portions through stretch, making it difficult to satisfy $\Delta Sa_1$ and $\Delta Sa_2$. Moreover, stretch generates significant strain on the film itself. Even if the film does not break due to stretch, damage can occur to the surface of the film and other layers formed on the film, and as a result the film tends to lose its functionality.

Therefore, it can be said that the stretchable film of this disclosure exhibits a different effect from a film having a surface that has an uneven shape imparted using a shaped sheet produced by sandblasting and the like.

Even in the case of adding particles to a resin, it is possible to form a film having a surface shape in which a plurality of convex portions are arranged irregularly and densely. However, in such films, the resin portion stretches when pulled, but the particles cannot stretch. In other words, in such films, the stretching does not occur due to the spreading of the convex portions, but rather the amount of stretching is mainly due to the film material, making it difficult to satisfy the numerical ranges for tensile elongation at break, $\Delta Sa_1$, and $\Delta Sa_2$ described above. In particular, the resin portion stretches when pulled, but the particles do not, resulting in the particles becoming more apparent. Therefore, the surface roughness $Sa_1(20)$ and $Sa_2(20)$ after stretch tend to be larger than the surface roughness $S(0)$ before stretch, resulting in $\Delta Sa_1$ and $\Delta Sa_2$ tending to have positive (+) values. Further, because stretch generates a large strain in the film itself, even if the film does not break due to stretch, damage can occur to the surface of the film and other layers formed on the film, and as a result the film tends to lose its functionality.

Therefore, it can be said that the stretchable film of this disclosure achieves a different effect from a film having a surface that has an uneven shape imparted due to the addition of particles.

Another known example of an uneven shape with folded wrinkles is an accordion-folded structure. In an accordion-folded structure, a narrowing of the gap between peaks results in a surface shape with densely packed convex portions. However, in an accordion-folded structure, the peaks and valleys are arranged regularly in one direction. Therefore, an accordion-folded film can easily stretch in the direction in which the peaks and valleys are arranged, but stretching it in the direction in which the ridges of the peaks extend is difficult. That is, an accordion-folded film has a directional dependency in the degree of stretch. In a film having an accordion-folded structure, if the direction in which the peaks and valleys are arranged is defined as the first direction, the tensile elongation at break and $\Delta Sa_1$ in the first direction may satisfy the above-described numerical ranges, but the tensile elongation at break and $\Delta Sa_2$ in the second direction may not satisfy the above-described numerical ranges.

Therefore, the uneven shape of the stretchable film of this disclosure differs from that of an accordion-folded structure, and the stretchable film of this disclosure can be said to exhibit effects different from those of a film having an accordion-folded surface.

As described above, the convex and concave portions of the stretchable film of this disclosure do not have shapes or arrangements that follow a set pattern, and hence it is difficult to generalize about the size of those portions. As an example, the width of the convex portions is 1 $\mu$m or more and 50 $\mu$m or less, and the length of the convex portions is 10 $\mu$m or more and 300 $\mu$m or less. The width of the concave portions is 1 $\mu$m or more and 100 $\mu$m or less. The length of the convex portions is defined as the length of the curved linear convex portion when stretched straight. By setting the sizes of the convex portions and the concave portions within the above ranges, it is possible to easily satisfy the numerical ranges of the tensile elongation at break, $\Delta Sa_1$, and $\Delta Sa_2$ described above.

In planar view, the area proportion of the convex portions is preferably 10% or more, more preferably 12.5% or more, and further preferably 15% or more, with an upper limit of preferably 70% or less, more preferably 60% or less, and further preferably 50% or less. When the area proportion of the convex portions is within the above range, it is easier to satisfy the above-described tensile elongation at break requirement.

To determine the area proportion of the convex portions, a first reference plane having a height calculated by adding P/6 to the average height is identified in an image of a 0.44 mm square observation area acquired using a white light interference microscope, and an area A ($mm^2$) of the area at or above the first reference plane is then analyzed. Using the obtained area A, the area proportion of the convex portions is calculated using the following formula.

Area proportion (%) of convex portions = $A/(0.44 \times 0.44) \times 100$

[Film size and physical properties]

<Thickness>

The thickness of the stretchable film in this disclosure is not particularly limited and can be set appropriately according to the application. Taking into consideration the strength, handleability, stretchability, and the like of the film, the lower limit value of the thickness of the stretchable film in an unstretched state is preferably 0.5 $\mu$m, more preferably 0.8 $\mu$m, and further preferably 1.0 $\mu$m, and the upper limit value is preferably 100 $\mu$m, more preferably 50 $\mu$m, and further preferably 30 $\mu$m.

The thickness of the stretchable film is measured by observing the cross section of the film in an unstretched state using a scanning electron microscope (SEM) and measuring the average thickness at 10 randomly selected locations on the cross-sectional image.

<Haze>

The stretchable film of this disclosure has, in an unstretched state, a haze (H(0)) according to JIS K7136: 2000 of preferably 50% or more, more preferably 60% or more, and further preferably 70% or more. Further, the stretchable film of this disclosure has, when stretched by 20%, a haze (H(20)) according to JIS K7136: 2000 of preferably 50% or more, more preferably 60% or more, and further preferably 70% or more. By setting the haze H(0) and H(20) within the above ranges, the glossiness of the stretchable film can be suppressed due to the light being scattered when the stretchable film is attached to the body, making the film less noticeable. In addition, by setting the haze H(0) and H(20) within the above ranges, high anti-glare properties can be obtained when the stretchable film is used in an image display device. On the other hand, the higher the haze H(0) and haze H(20), the more whitish the stretchable film will appear due to light scattering. To make the stretchable film less noticeable when attached to the body, the stretchable film of this disclosure has, in an unstretched state, a haze (H(0)) according to JIS K7136: 2000 of preferably 99% or less, more preferably 95% or less, and further preferably 90% or less. For the same reasons, the stretchable film of this disclosure has, when stretched by 20%, a haze (H(20)) according to JIS K7136: 2000 of preferably 99% or less, more preferably 95% or less, and further preferably 90% or less.

The upper limit value of the rate of change in haze ($\Delta H = (H(20) - H(0))/H(0) \times 100$) according to JIS K7136: 2000 before and after stretch of the stretchable film of this disclosure is preferably 10% or less, more preferably 5% or less, and further preferably 3% or less. Further, the rate of change in haze $\Delta H$ is preferably -10% or more, more preferably -5% or more, and further preferably -3% or more. When the rate of change in haze $\Delta H$ is within the above range, the whiteness due to light scattering becomes uniform throughout the entire stretchable film when the film is stretched, thereby allowing visual changes in the stretched areas to be suppressed.

<Total light transmittance>

The stretchable film of this disclosure has, in an unstretched state, a total light transmittance (T(0)) according to JIS K7361-1: 1997 of preferably 80% or more, more preferably 85% or more, and further preferably 90% or more. Further, the stretchable film of this disclosure has, when stretched by 20%, a total light transmittance (T(20)) according to JIS K7361-1: 1997 of preferably 80% or more, more preferably 85% or more, and further preferably 90% or more. By setting the total light transmittance T(0) and T(20) to satisfy the above ranges, the stretchable film can be made less noticeable when attached to the body. In addition, when the total light transmittance T(0) and T(20) satisfy the above ranges, high brightness can be obtained when used in an image display device. There are no particular restrictions on the upper limit values of the total light transmittance T(0) and T(20), but it is preferable that the upper limit values for both are 99% so that the attached location can be visually confirmed when peeling off the stretchable film.

In the stretchable film of this disclosure, the rate of change in total light transmittance ($\Delta T = (T(20) - T(0))/T(0) \times 100$) according to JIS K7361-1: 1997 before and after stretch is preferably 3% or less, more preferably 1% or less, and further preferably 0.5% or less. Further, the rate of change in total light transmittance $\Delta T$ is preferably -3% or more, more preferably -1% or more, and further preferably -0.5% or more. When the rate of change in total light transmittance $\Delta T$ is within the above range, the stretchable film can be made less noticeable when attached to the body. In addition, when the rate of change in total light transmittance $\Delta T$ is within the above range, uneven brightness within the surface of the stretchable film when the film is partially stretched when used in an image display device can be easily suppressed.

<Luminous reflectance>

The stretchable film of this disclosure has, in an unstretched state, when measured at a light incident angle of 5 degrees from the surface having an uneven shape, a luminous reflectance Y value (Y(0)) of preferably 6.0% or less, more preferably 5.5% or less, and further preferably 5.0% or less. The stretchable film of this disclosure has, when stretched by 20%, when measured at a light incident angle of 5 degrees from the surface having an uneven shape, a luminous reflectance Y value (Y(20)) of preferably 6.0% or less, more preferably 5.5% or less, and further preferably 5.0% or less. By setting the luminous reflectance Y(0) and Y(20) within the above ranges, the stretchable film can be made less noticeable when attached to the body. In addition, by setting the luminous reflectance Y(0) and Y(20) within the above ranges, reflection can be suppressed when used in an image display device. There are no particular restrictions on the lower limit values of the luminous reflectance Y(0) and Y(20), but it is preferable that the lower limit value for both is 0.1% so that the attached location can be visually confirmed, for example, when peeling off the stretchable film.

In the stretchable film of this disclosure, the rate of change in the luminous reflectance Y value ($\Delta Y = (Y(20) - Y(0))/Y(0) \times 100$) before and after stretch is preferably 10% or less, more preferably 5% or less, and further preferably 3% or less. Further, the rate of change in luminous reflectance $\Delta Y$ is preferably -10% or more, more preferably -5% or more, and further preferably -3% or more. When the rate of change in luminous reflectance $\Delta Y$ is within the above range, uneven reflection on the surface of the stretchable film when the film is stretched can be suppressed. Particularly when attached to the body, the stretchable film can be made less noticeable.

In this disclosure, the luminous reflectance Y value is measured by preparing a sample in which a black PET film is attached to the surface of the stretchable film opposite to the surface having an uneven shape via a transparent adhesive layer, and illuminating the sample with light incident at an incident angle of 5° from the surface having an uneven shape. The luminous reflectance Y value at 20% stretch is measured using a sample obtained by, with the film stretched by 20%, laminating a black PET film on the surface of the stretchable film opposite to the surface having an uneven shape using a stretch jig described in the Examples, and then removing the stretchable film from the stretch jig. The light source used for calculating reflectance is a D65 light source.

The difference in refractive index between the transparent adhesive layer and the member in contact with the transparent adhesive layer of the sample is 0.15 or less. The difference in refractive index is preferably 0.10 or less, and more preferably 0.05 or less. The member in contact with the transparent adhesive layer of the sample is, for example, a resin layer. The black plate has a total light transmittance according to JIS K7361-1: 1997 of 1% or less. The total light transmittance of the black PET is preferably 0%. The difference in refractive index between the resin constituting the black plate and the transparent adhesive layer is 0.15 or less. This refractive index difference is preferably 0.10 or less, and more preferably 0.05 or less.

<60° gloss value>

The stretchable film of this disclosure has, in an unstretched state, a 60° gloss value (G(0)) measured from the surface having an uneven shape according to JIS Z8741: 1997 of preferably 30% or less, more preferably 20% or less, and further preferably 10% or less. Further, the stretchable film of this disclosure has, when stretched by 20%, a 60° gloss value (G(20)) according to JIS Z8741: 1997 of preferably 30% or less, more preferably 20% or less, and further preferably 10% or less. By setting the 60° gloss value G(0) and G(20) to satisfy the above ranges, the stretchable film can be made less noticeable when attached to the body. In addition, when the 60° gloss value G(0) and G(20) satisfy the above ranges, high anti-glare properties can be obtained when used in an image display device. There are no particular restrictions on the lower limit values of the 60° gloss value G(0) and G(20), but it is preferable that the lower limit values for both are 0.1% so that the attached location can be visually confirmed, for example, when peeling off the stretchable film.

In the stretchable film of this disclosure, the rate of change in the 60° gloss value ($\Delta G = (G(20) - G(0))/G(0) \times 100$) before and after stretch is preferably 50% or less, more preferably 40% or less, and further preferably 30% or less. Further, the rate of change in the 60° gloss value is preferably -50% or more, more preferably -40% or more, and further preferably -30% or more. When the rate of change in the 60° gloss value is within the above range, when the stretchable film is stretched, the glossiness is uniform across the entire film, and visual change in the stretched section can be suppressed.

The 60° gloss value is measured according to Method 3 listed in Table 2 of JIS Z8741: 1997. The samples used for measuring the 60° gloss value are prepared using the same steps as used for measuring the luminous reflectance.

In this specification, unless otherwise specified, haze, total light transmittance, luminous reflectance, and 60° gloss value refer to the average of 14 measurement values obtained by excluding the maximum and minimum values from 16 measurement areas.

[Resin composition]

Each of the components of the resin composition used to obtain the resin layer of the stretchable film of this disclosure are described in detail below.

(Resin)

As described in the production method below, the resin constituting the stretchable film of this disclosure can be, as an example of a resin curable by ultraviolet irradiation, an ionizing radiation-curable resin.

An ionizing radiation-curable resin is a resin having an ionizing radiation-curable functional group. The ionizing radiation-curable functional group is a group that crosslinks and cures when irradiated with ionizing radiation. Preferred examples include functional groups having an ethylenic double bond, such as a (meth)acryloyl group, a vinyl group, and an allyl group. In this disclosure, the ionizing radiation-curable functional group is preferably a (meth)acrylate.

In addition, as used herein, "(meth)acryloyl group" refers to an acryloyl group or a methacryloyl group. Furthermore, as used herein, "(meth)acrylate" refers to acrylate or methacrylate.

Further, "ionizing radiation" refers to electromagnetic waves or charged particle beams that have an energy quantum capable of polymerizing and/or crosslinking molecules. Typically, ultraviolet (UV) or electron beams (EB) are used, but other examples include electromagnetic waves such as X-rays and $\gamma$-rays, and charged particle beams such as $\alpha$-rays and ion beams.

The stretchable film of this disclosure preferably contains an elastic resin so that it is easier to satisfy the numerical ranges for tensile elongation at break, $\Delta Sa_1$, and $\Delta Sa_2$ described above. In addition, depending on the intended use of the stretchable film of this disclosure, the resin preferably has strength, such as scratch resistance, and weather resistance. Examples of such resins include urethane-based ionizing radiation-curable resins. Among these, it is preferable to include a urethane (meth)acrylate oligomer.

The urethane (meth)acrylate oligomer used in this disclosure has an isocyanate unit, a polyol unit, and a (meth)acrylate unit. The isocyanate unit is derived from a polyfunctional isocyanate. The (meth)acrylate unit is derived from a hydroxyl group-containing (meth)acrylate monomer. Therefore, the urethane (meth)acrylate oligomer used in this disclosure is a resin obtained by polymerizing a polyfunctional isocyanate compound, a polyol compound, and a hydroxyl group-containing (meth)acrylate monomer.

The polyfunctional isocyanate compound, the polyol compound, and the hydroxyl group-containing (meth) acrylate monomer may each be used alone or in combination of two or more.

Examples of the polyfunctional isocyanate compound include an aromatic polyisocyanate such as tolylene diisocyanate, diphenylmethane diisocyanate, xylylene diisocyanate, and polymethylene polyphenylene polyisocyanate; an aliphatic polyisocyanate such as hexamethylene diisocyanate and isophorone diisocyanate, and the like. Of these, an isophorone diisocyanate is preferred.

The polyol compound is a segment that imparts elasticity to the film. Examples of the polyol compound include a polyether polyol, a polyester polyol, and a polyoxyalkylene polyol, and polyoxyalkylene polyol is preferred. Examples of the polyoxyalkylene polyol include a polyoxyethylene polyol and a polyoxypropylene polyol. The number of repeating oxyalkylene units in the polyoxyalkylene polyol is preferably 2 or more and 8 or less, more preferably 2 or more and 5 or less, further preferably 2 or 3, and particularly preferably 2.

Examples of the hydroxyl group-containing (meth)acrylate monomer include hydroxyethyl (meth)acrylate, 2-hydroxyethyl (meth)acrylate, hydroxypropyl (meth)acrylate, pentaerythritol triacrylate, and the like. The hydroxyl group-containing (meth)acrylate monomer can be appropriately selected according to the number of functional groups of the urethane (meth)acrylate oligomer.

Taking into consideration elasticity, strength after curing, and the like, the proportion of isocyanate units in the urethane (meth)acrylate oligomer is preferably 5% by mass or more and 80% by mass or less, and more preferably 5% by mass or more and 70% by mass or less. The proportion of polyol units in the urethane (meth)acrylate oligomer is preferably 10% by mass or more and 90% by mass or less, and more preferably 20% by mass or more and 90% by mass or less. The proportion of (meth)acrylate units in the urethane (meth)acrylate oligomer is preferably 0.1% by mass or more and 10% by mass or less, and more preferably 0.1% by mass or more and 5% by mass or less.

Taking into consideration elasticity, strength after curing, and viscosity, the number of functional groups of the urethane (meth)acrylate oligomer is more preferably 2 or 3, and particularly preferably 2.

The weight average molecular weight of the urethane (meth)acrylate oligomer is preferably 8,000 or more and 100,000 or less, more preferably 8,300 or more and 80,000 or less, and further preferably 8,500 or more and 50,000 or less. The weight average molecular weight in this disclosure is the average molecular weight measured by GPC analysis and that is stated in terms of standard polystyrene.

Elasticity can be improved by using a urethane (meth)acrylate oligomer that has a small number of functional groups and a large molecular weight.

For the purpose of stably forming the above-described wrinkles and making it easier to satisfy the above-mentioned numerical ranges for the tensile elongation at break, $\Delta Sa_1$, and $\Delta Sa_2$, it is preferable that the ionizing radiation-curable resin further contains a polymerizable monomer. The polymerizable monomer is preferably a (meth)acrylate monomer. The (meth)acrylate monomer may be a monofunctional (meth)acrylate monomer or a polyfunctional (meth)acrylate monomer. As the number of functional groups of (meth)acryloyl group increases, wrinkles tend to form more easily, but elasticity tends to decrease. To achieve a good balance between elasticity and ease of wrinkle formation, examples of a suitable (meth)acrylate monomer include a monofunctional (meth)acrylate monomer and a bifunctional (meth)acrylate monomer, and a bifunctional (meth)acrylate monomer is more preferred.

Examples of the monofunctional (meth)acrylate monomer include acryloylmorpholine, isobornyl (meth)acrylate, tetrahydrofurfuryl alcohol, β-carboxyethyl (meth)acrylate, phenoxyethyl (meth)acrylate, and the like. Examples of the bifunctional (meth)acrylate monomer include triethylene glycol di(meth)acrylate, dipropylene glycol di(meth)acrylate, 1,6-hexanediol di(meth)acrylate, tripropylene glycol di(meth)acrylate, and the like.

One type of (meth)acrylate monomer may be used alone, or a plurality of types may be used.

The blending ratio between the urethane (meth)acrylate oligomer and the polymerizable monomer (urethane (meth)acrylate oligomer/polymerizable monomer) can be adjusted taking into consideration elasticity, strength after curing, ease of wrinkle formation, and the like. The higher the blending ratio of the polymerizable monomer, the easier it is for wrinkles to form, but the lower the blending ratio of the bifunctional urethane acrylate oligomer, the lower the elasticity tends to be. Further, if an excessive amount of polymerizable monomer is blended, the number of bonds between the polymerizable monomers increases, and the polymerizable monomers act as a plasticizer in the cured resin, which may result in a decrease in strength after curing. The blending ratio between the urethane (meth)acrylate oligomer and the polymerizable monomer is preferably in the range of 95/5 to 50/50, more preferably in the range of 90/10 to 60/40, and further preferably in the range of 85/15 to 70/30.

(Photopolymerization initiator)

Since the resin is a UV-curable resin that is cured when exposed to ultraviolet light, it is preferable to include a photopolymerization initiator. By including a photopolymerization initiator in the resin composition, the resin can be cured by ultraviolet irradiation, and surface properties that are useful in practice can be obtained.

Examples of the photopolymerization initiator include one or more selected from the group consisting of acetophenone, benzophenone, α-hydroxyalkylphenone, 1-hydroxycyclohexyl phenyl ketone, Michler's ketone, benzoin, benzyl dimethyl ketal, benzoyl benzoate, α-acyloxime ester, a thioxanthone, and the like.

(Other components)

The resin composition may contain a photopolymerization accelerator, a solvent, an ultraviolet absorber, a light stabilizer, a leveling agent, a colorant, and the like according to the properties of the resin composition and the performance required of the stretchable film.

The photopolymerization accelerator reduces polymerization inhibition caused by air during curing and can increase the curing rate. Examples of the photopolymerization accelerator include one or more selected from p-dimethylaminobenzoic acid isoamyl ester, p-dimethylaminobenzoic acid ethyl ester, and the like.

A solvent may be added as needed to adjust the viscosity of the resin composition and adjust the solid content. It is not required to use a solvent if there is no hindrance to the processes during manufacturing, such as coating.

There are no particular restrictions on the solvent used, and any commonly used solvent can be selected and used as appropriate. Examples of the solvent include ketones such as acetone, methyl ethyl ketone, methyl isobutyl ketone (MIBK), and cyclohexanone; ethers such as dioxane and tetrahydrofuran; aliphatic hydrocarbons such as hexane; alicyclic hydrocarbons such as cyclohexane; aromatic hydrocarbons such as toluene and xylene; halogenated carbons such as dichloromethane and dichloroethane; esters such as methyl acetate, ethyl acetate, and butyl acetate; alcohols such as isopropanol, butanol, and cyclohexanol; cellosolves such as methyl cellosolve and ethyl cellosolve; glycol ethers such as propylene glycol monomethyl ether acetate; cellosolve acetates; sulfoxides such as dimethyl sulfoxide; amides such as dimethylformamide and dimethylacetamide; and the like. These solvents may be used alone or in combination as a mixture.

Examples of the ultraviolet absorber include a benzotriazole-based ultraviolet absorber, a benzophenone-based ultraviolet absorber, a triazine-based ultraviolet absorber, and a hydroxyphenyltriazine-based ultraviolet absorber. Examples of the light stabilizer include a hindered amine-based light stabilizer such as a piperidinyl sebacate-based light stabilizer.

A leveling agent may be added to improve the wettability of the resin composition to a releasable base material when the resin composition is applied on the releasable base material in the production method described later, and to adjust the surface state of the coated film, thereby reducing variation in the surface state of the coated film. Examples of the leveling agent include a silicone-based leveling agent and a fluorine-based leveling agent.

[Method for producing stretchable film]

The method for producing the stretchable film of this disclosure includes a step of applying a resin composition on a releasable base material to form a coated layer, a step of irradiating the coated layer with light having a wavelength of at least 100 nm or more and 380 nm or less, and a step of peeling off the releasable base material.

<Step of forming coated layer>

The releasable base material can be a support sheet alone, or a multilayer body having a release layer formed on a support sheet.

The support sheet is not particularly limited, and various materials such as a resin, a metal, a non-metallic inorganic material, a paper material, and a wood-based material can be appropriately selected depending on the application. The support sheet can be a single layer selected from these, or a multilayer combination of two or more layers of materials selected from among these. The support sheet is preferably a resin or a fibrous material, more preferably a resin, because such a support sheet is easier to peel, easier to handle, and better in terms of economic cost.

Examples of the resin that can be used for the support sheet include various synthetic resins and natural resins. Examples of synthetic resins include thermoplastic resins and curable resins, and a thermoplastic resin is preferred in consideration of suitability for manufacturing a matte article, handleability, and post-processing properties.

Preferred examples of thermoplastic resins include an olefin resin such as polyethylene, polypropylene, polymethylpentene, an ionomer, and various olefin-based thermoplastic elastomers; a vinyl chloride resin such as polyvinyl chloride, polyvinylidene chloride, and a vinyl chloride-vinyl acetate copolymer; a polyester resin such as polyethylene terephthalate, polybutylene terephthalate, polyethylene naphthalate, an ethylene glycol-terephthalic acid-isophthalic acid copolymer, and a polyester-based thermoplastic elastomer; an acrylic resin such as polymethyl(meth)acrylate, polyethyl(meth)acrylate, polybutyl(meth)acrylate, and a methyl(meth)acrylate-butyl(meth)acrylate copolymer; a polyamide resin typified by nylon 6, nylon 66, and the like; a cellulose resin such as cellulose triacetate, cellophane, and celluloid; a styrene resin such as polystyrene, an acrylonitrile-styrene copolymer, and an acrylonitrile-butadiene-styrene copolymer (ABS resin); polyvinyl alcohol, an ethylene-vinyl acetate copolymer, an ethylene-vinyl alcohol copolymer, a polycarbonate resin, a polyarylate resin, a polyimide resin, and the like.

Preferred examples of the paper material include tissue paper, kraft paper, fine paper, Japanese paper, titanium paper, linter paper, vegetable parchment, paraffin paper, parchment paper, glassine paper, wallpaper backing paper, paperboard, gypsum board base paper, reinforced paper, resin-impregnated paper, and the like.

A release layer is an optional layer that is provided to facilitate the release of the releasable base material from the film after the resin composition has been cured to form a film. Examples of the release layer include a layer containing polyvinyl alcohol, acrylic resin, vinyl chloride-vinyl acetate, an olefin-based resin, a silicone resin, a fluororesin, various resins modified with silicone or fluorine, and the like. A wax can be mixed into these resins as needed.

Preferred examples of the wax include various waxes such as microcrystalline wax, carnauba wax, paraffin wax, Fischer-Tropsch wax, various low-molecular-weight polyethylenes, Japan wax, beeswax, spermaceti wax, privet wax, wool wax, shellac wax, candelilla wax, petrolactam, a partially modified wax, a fatty acid ester, a fatty acid amide, and the like.

The resin composition contains the above-described urethane (meth)acrylate oligomer, and is prepared by adding the polymerizable monomer, photopolymerization initiator, solvent, and the like as necessary.

The resin composition can be applied using a known method such as gravure printing, bar coating, roll coating, reverse roll coating, and comma coating. The thickness of the coated layer is not particularly limited, and can be determined based on the thickness required for the stretchable film. The lower limit value of the dried thickness of the coated layer is preferably 0.5 $\mu$m, more preferably 0.8 $\mu$m, and further preferably 1.0 $\mu$m, and the upper limit value is preferably 100 $\mu$m, more preferably 50 $\mu$m, and further preferably 30 $\mu$m.

<Light irradiation step>

In the production method of this disclosure, the resin composition is irradiated with light having a wavelength of at least 100 nm or more and 380 nm or less. From this irradiation, ultraviolet energy penetrates only the surface, and the energy does not reach the layers below. As a result, only the surface of the resin composition begins to cure. Shrinkage occurs during this curing, causing wrinkles to form, and the surface layer of the resin composition turns into a cured product. The curing then progresses from the surface vicinity, where curing is slow, to areas further away in the depth direction, and the resin composition layer turns into a cured product. As a result, the resin composition is cured throughout its entire thickness, and a resin layer having an uneven shape due to the wrinkles is formed on the surface.

The light having a wavelength of at least 100 nm or more and 380 nm or less is, for example, preferably "excimer light" that includes light in the ultraviolet wavelength region from a dimer in an excited state, i.e., an excimer, formed by a discharge of a rare gas of Ar, Kr, Xe, Ne, or the like, a gas of a halide of a rare gas of a halogen of F, Cl, I, Br, or the like, or a mixed gas thereof. The wavelength of the excimer light and the excimer serving as the light source to be used are preferably, for example, light having a wavelength of 126 nm radiated from an $Ar_2$ excimer (hereinafter abbreviated in the manner "126 nm ($Ar_2$)"), 146 nm ($Kr_2$), 157 nm ($F_2$), 172 nm ($Xe_2$), 193 nm (ArF), 222 nm (KrCl), 247 nm (KrF), 308 nm (XeCl), 351 nm (XeF), and the like. The excimer light to be used can be either spontaneous emission light or laser light with a high coherence due to stimulated emission, but spontaneous emission light is usually sufficient. It is noted that a discharge lamp that emits light (ultraviolet light) is also called an "excimer lamp."

Excimer light is characterized by having a single wavelength peak and a narrower half-width wavelength than normal ultraviolet light (such as the ultraviolet light emitted from a metal halide lamp, a mercury lamp, and the like). The use of such excimer light allows for the stable formation of wrinkles. Further, wrinkles formed using excimer light have a relatively uniform depth, narrow width, and narrow gap between adjacent wrinkles, as shown in Fig. 3. Therefore, using excimer light to form the wrinkles makes it easier to prevent localized clustering of areas having large heights or small heights. In other words, by forming the wrinkles using excimer light, $\sigma/Sa'(0)$ tends to be reduced and conditions 1 and 2 tend to be satisfied.

To stably form the wrinkles, the wavelength is preferably 120 nm or more, more preferably 140 nm or more, further preferably 150 nm or more, and still further preferably 155 nm or more. The upper limit is preferably 320 nm or less, more preferably 300 nm or less, further preferably 250 nm or less, still further preferably 200 nm or less, and most preferably 172 nm ($Xe_2$). Thus, in this disclosure, it is preferable to use light having a shorter wavelength, and it can be said that medium-wavelength ultraviolet light (wavelength: 280 to 320 nm) and short-wavelength ultraviolet light (wavelength: 280 nm or less) are more preferable, and short-wavelength ultraviolet light is further preferable.

In this disclosure, the cumulative light dose of the light having the above wavelength is, from the perspective of stably forming the wrinkles, preferably 1 mJ/cm$^2$ or more, more preferably 10 mJ/cm$^2$ or more, further preferably 30 mJ/cm$^2$ or more, and still further preferably 50 mJ/cm$^2$ or more. There is no particular restrictions on upper limit, but in consideration of reducing the number of lamps required for irradiation and improving production efficiency, the cumulative light dose is preferably 1,000 mJ/cm$^2$ or less, more preferably 500 mJ/cm$^2$ or less, and still further preferably 300 mJ/cm$^2$ or less. For similar reasons, the ultraviolet light output density is preferably 0.001 W/cm or more, more preferably 0.01 W/cm or more, and further preferably 0.03 W/cm. The upper limit is preferably 10 W/cm or less, more preferably 5 W/cm or less, and further preferably 3 W/cm or less.

In addition, the oxygen concentration when irradiating the light having the above wavelength is preferably lower, preferably 1,000 ppm or less, more preferably 750 ppm or less, further preferably 500 ppm or less, and still further preferably 300 ppm or less.

In this step, in addition to the irradiation with light having a wavelength of at least 100 nm or more and 380 nm or less, another treatment that contributes to the curing of the resin composition may also be performed.

For example, to stabilize the formation of wrinkles and promote the progression of curing from the surface vicinity to areas further away in the depth direction, the resin composition may be pre-irradiated with light having a wavelength of more than 380 nm, preferably light having a wavelength of approximately 385 nm or more and 400 nm or less, to pre-cure the entire resin composition, and then irradiated with light having a wavelength of 100 nm or more and 380 nm or less. Alternatively, post-curing may be performed to further cure the resin composition after irradiation with light having a wavelength of 100 nm or more and 380 nm or less. The need for pre-curing and/or post-curing can be determined appropriately depending on factors such as productivity and the performance required of the stretchable film. Further, other kinds of ionizing radiation, such as electron beam, can also be used in addition to ultraviolet light. For example, an electron beam may be used in post-curing to improve surface properties.

<Peeling step>

After the resin layer is formed, the releasable base material is peeled off, to thereby obtain the stretchable film of this disclosure having an uneven shape on one surface.

Another method for producing the stretchable film of this disclosure has a step of obtaining a shaped sheet or an embossed plate using the stretchable film obtained by the above method, a step of applying a resin composition on a releasable base material to form a coated layer, a step of curing the resin composition while bringing the shaped sheet or embossed plate into contact with the surface of the coated layer to form a resin layer, and a step of peeling the resin layer from the shaped sheet or embossed plate.

In this way, by using a shaped sheet or embossed plate made from the stretchable film of this disclosure, a film having an uneven shape on one surface can be obtained.

[Applications]

The stretchable film of this disclosure is applicable to medical members such as skin sensors, film dressings, and transdermal absorption preparations; cosmetics used by adhering to the body such as makeup products, sun care products, and fragrances; and hygiene products used by adhering to the body such as deodorant products and cooling sheets. The stretchable film of this disclosure is also applicable to members constituting image display devices such as polarizing plates and anti-reflection films.

In this disclosure, a resin layer alone (film) as illustrated in Fig. 1 can be used for the above-described applications. Alternatively, a multilayer body of a resin layer and other layers can be used for the above-described applications.

Examples of the layer structure of the multilayer body include the following.

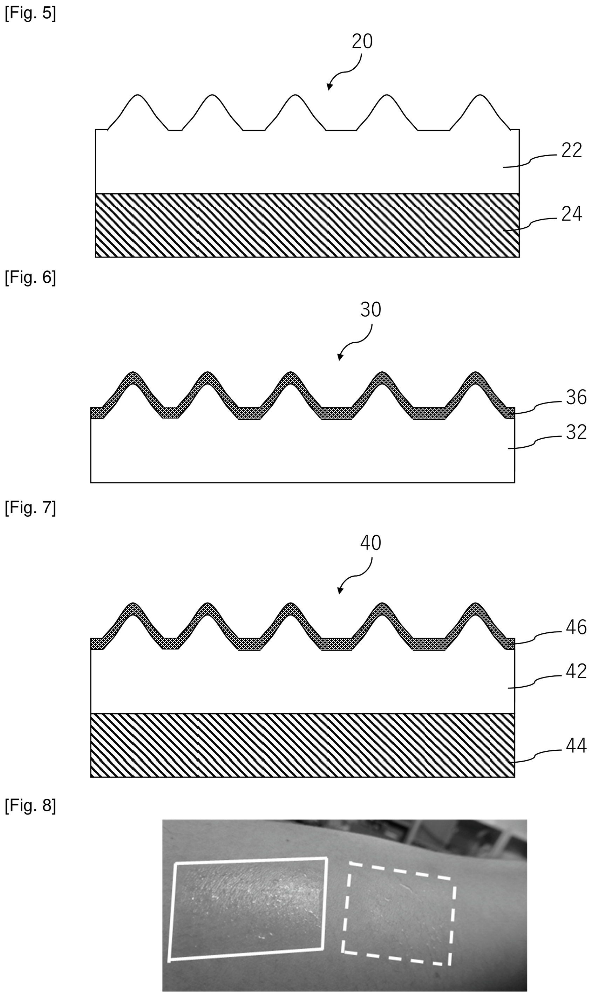

Fig. 5 is a schematic cross-sectional view of an example of a multilayer body of this disclosure. The multilayer body 20 in Fig. 5 has a resin layer 22 and an adhesive layer 24 formed on the side of the resin layer 22 opposite the surface having an uneven shape. A known adhesive can be used for the adhesive layer. The adhesive layer preferably has stretchability. As a modified example of the multilayer body shown in Fig. 5, a base material layer having releasability may be provided on the surface of the adhesive layer 24 opposite the resin layer 22. Examples of base material layer include various films, paper base materials, and the like.

Fig. 6 is a schematic cross-sectional view of another example of a multilayer body of this disclosure. The multilayer body 30 in Fig. 6 has a resin layer 32 and a functional layer 36 formed on the unevenly-shaped surface of the resin layer 32. Examples of the functional layer include an anti-reflection layer, a hard coat layer, an electrode layer, an ultraviolet absorbing layer, a drug layer, a fragrance layer, and a deodorizing layer, and such layers are provided as appropriate according to the intended use of the multilayer body. These layers can be formed by a known method. The electrode layer may be patterned.

Fig. 7 is a schematic cross-sectional view of another example of a multilayer body according to this disclosure. The multilayer body 40 of Fig. 7 has a resin layer 42, an adhesive layer 44 formed on the side of the resin layer 42 opposite the surface having an uneven shape, and a functional layer 46 formed on the unevenly-shaped surface of the resin layer 42. As a modified example of the multilayer body shown in Fig. 7, similar to the modified example of the multilayer body shown in Fig. 5., a base material layer having releasability may be provided on the surface of the adhesive layer 44 opposite the resin layer 42.

Fig. 8 is a photograph showing an example of the use of the stretchable film of this disclosure, in which the stretchable film is adhered to the human body. The area enclosed by the dotted line on the right side of the photograph is the area where the stretchable film of this disclosure is attached. The area enclosed by the solid line on the left side of the photograph is the area where a film made of the same material as the stretchable film of this disclosure but without an uneven shape on its surface is attached. The stretchable film of this disclosure is less likely to reflect light and has anti-glare properties. Therefore, it is less noticeable when attached to the human body. On the other hand, a film without an uneven shape on its surface reflects illumination light and shines, and as a result the area where the film is attached is easy to see.

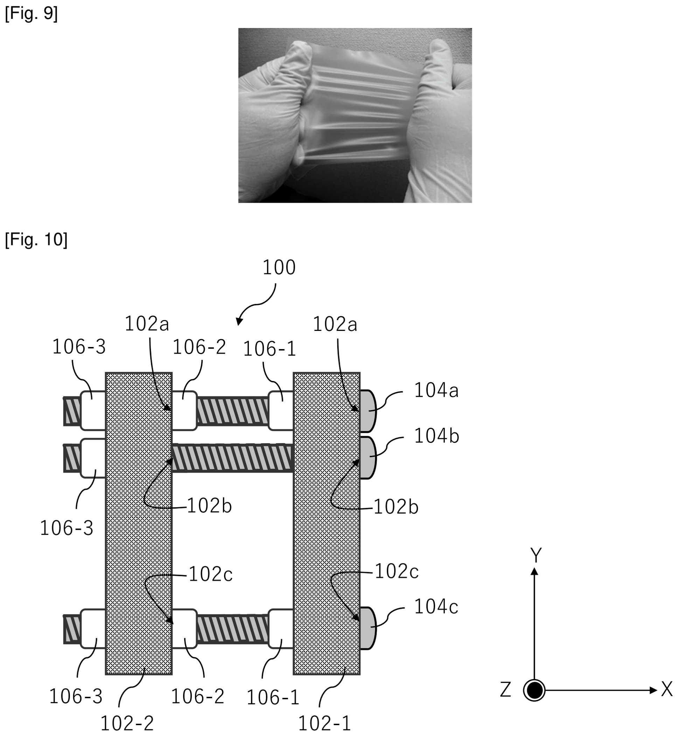

Fig. 9 is a photograph showing an example of the use of the elastic film of this disclosure. Fig. 9 shows a multilayer body in which an adhesive layer is formed on a resin layer, and a stretchable film is provided on the surface of the adhesive layer opposite the resin layer.

The multilayer body in Fig. 9 can be freely deformed, including stretching, bending, twisting, and folding. Even after repeated deformation of the multilayer body of Fig. 9, damage such as cracking and tearing can be prevented. The multilayer body also has excellent handleability. Because the multilayer body can be repeatedly stretched, it can be said that the elastic film of this disclosure can be used on the surface of a deformable image display device. Because the elastic film of this disclosure has the above-described uneven shape on its surface, when applied to an image display device, reflection of illumination light and the like can be suppressed. Further, an image display device using the elastic film of this disclosure has various kinds of deformation properties, such as stretching, bending, twisting, and folding.

Examples

Next, the present invention will be described in more detail with reference to examples, but the present invention is not limited in any way to these examples.

1. Measurement and evaluation

The measurement and evaluation atmosphere in the following 1-1 to 1-3 is a temperature of 23°C $\pm$5°C and a relative humidity of 40% or more and 65% or less. Moreover, prior to measurement and evaluation, the measurement sample is exposed to this atmosphere for 30 minutes or more and 60 minutes or less. The measurement sample is taken from a clean, undamaged location. Measurement and evaluation are performed when the sample is in a thoroughly flat state.

1-1. White light interference microscope observation

(1) Sample preparation

The sheets of Examples 1 to 4 and Comparative Examples 1 to 5 were visually inspected for any abnormalities, such as dust or scratches. Then, a 50 mm$\times$50 mm sample was cut from each sheet, with the long side of the sheet in a first direction and the short side in a second direction, so that the sample edges were parallel to the first and second directions, respectively.

(2) Measurement preparation

<Measurement sample before stretch>

When observing in an unstretched state, the measurement sample was prepared in accordance with the following procedure.
The releasable base material or cover film was slowly peeled off from each sample. A piece of black PET (PET75NBPET38, manufactured by Lintec Corporation) having an adhesive layer formed on one surface was placed on the release surface of the sample so that the release surface and the adhesive layer were in contact. An ASPURE Hand Cleaner II (manufactured by AS ONE Corporation) was then brought into contact with the black PET and moved once. As a result, the measurement sample was obtained.

<Measurement sample after stretch>

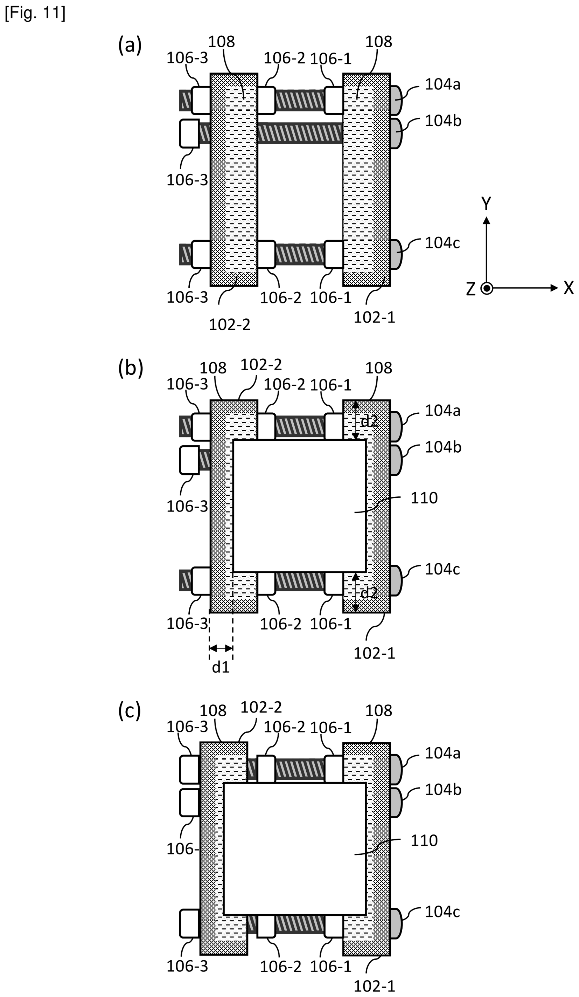

When observing in an stretched state, the measurement sample was prepared in accordance with the following procedure.
A stretch jig as shown in Fig. 10 was prepared. Fig. 10 is a schematic diagram of the stretch jig, viewed from the top (+Z direction). A stretch jig 100 comprises a pair of support parts 102-1 and 102-2, male screws 104a to 104c, and nuts 106-1 to 106-3.
The support parts 102-1 and 102-2 are each a rectangular parallelepiped with a cross section measuring 13 mm vertically, 13 mm horizontally, and 80 mm long. The cross sections of the support parts 102-1 and 102-2 correspond to the XZ cross section in Fig. 10, and their lengths coincide with the Y direction. When viewed from the +X direction, the support parts 102-1 and 102-2 each have three cylindrical through-holes 102a to 102c formed on the side surface in the longitudinal direction (Y direction). The diameter of the through-holes 102a to 102c is 6 mm. The through-holes 102a to 102c are arranged so that their centers coincide with the longitudinal center lines of the side surfaces of the support parts 102-1 and 102-2. Therefore, the through-holes 102a to 102c are provided 3.5 mm away from each of the long sides of the side surfaces of the support parts 102-1 and 102-2 when viewed from the +X direction. When viewed from the +X direction, the through-holes 102a and 102c are each located 2 mm away from the short sides of the side surfaces of the support parts 102-1 and 102-2. The distance between the through-holes 102a and 102b is 7.5 mm. The support parts 102-1 and 102-2 were manufactured using a 3D printer from an ultraviolet-curing resin (ELEGOO Standard LCD UV-Curing Photopolymer Rapid Resin (Green) manufactured by ELEGOO).
The male screws (80 mm long M5 metric coarse threads) 104a to 104c are inserted into the through-holes 102a to 102c of the support parts 102-1 and 102-2. At this time, each of the male screws 104a to 104c is inserted from one of the support parts. The positions of the support parts 102-1 and 102-2 are fixed by the nuts 106-1 to 106-3 (hexagonal nuts, M5, type 1). For the male screws 104a and 104c, three nuts 106-1 to 106-3 are placed as shown in Fig. 10. For the male screw 104b, a nut 106-3 is placed only on the tip side of the screw.
The procedure for preparing a measurement sample in an stretched state is shown in Fig. 11.
As shown in Fig. 11(a), the support part 102-1 was fixed with a nut 106-1, and the support part 102-2 was fixed with the nuts 106-2 and 106-3 on the male screws 104a and 104c so that the distance between the support parts 102-1 and 102-2 (the distance between the opposing sides of the support parts 102-1 and 102-2) was 30 mm. The nut 106-3 on the male screw 104b was left loose.

Double-sided tape (No. 775, manufactured by Teraoka Seisakusho Co., Ltd.) was cut into a 10 mm × 60 mm piece and attached to the top surface (sample mounting surface) of each support part 102. At this time, as shown in Fig. 11(a), the long sides of double-sided tape 108 were arranged along the opposing sides of the support parts 102-1 and 102-2. In addition, the double-sided tape 108 was arranged so that the areas up to 10 mm in the longitudinal direction from both ends of the support parts 102-1 and 102-2 were free of double-sided tape.

Next, as shown in Fig. 11(b), the sample was adhered to the double-sided tape 108 so that the resin layer was facing the support part and so that the sample would not bend. At this time, the sample was placed so that the longitudinal (Y-direction) sides of the support parts 102-1 and 102-2 were approximately parallel to the sides of the film. The sample was also placed so that the distance d1 between the sides of the support parts 102-1 and 102-2 on the tip sides of the male screws 104a to 104c and the sides of the film was in the range of 0 mm to 6 mm, and the distance d2 from either end of the short sides of the support parts 102-1 and 102-2 was in the range of 10 mm to 20 mm.

After the sample was adhered, the releasable base material or cover film was slowly peeled off such that the resin layer was not stretched. As a result, the resin layer 110 was fixed to the support parts 102-1 and 102-2.

Next, as shown in Fig. 11(c), the nuts 106-3 were each moved toward the tip of the male screw (in the -X direction). Then, the support part 102-2 was moved by moving the nut 106-2 toward the tip of the male screw. At this time, the two nuts 106-2 were moved alternately so that the difference between the distance of the support parts on the male screw 104a side and the distance of the support parts on the male screw 104c side was not 1 mm or more. After moving the nuts 106-2 by 6 mm, the support 102-2 was fixed by tightening the nuts 106-3. This operation stretched the resin layer 110.

Next, a piece of black PET (PET75NBPET38, manufactured by Lintec Corporation) having an adhesive layer formed on one surface was placed on the resin layer from the +Z direction in Fig. 11(c). In this state, ASPURE Hand Cleaner II (manufactured by AS ONE Corporation) was brought into contact with the black PET and moved once along the longitudinal direction of support parts 102-1 and 102-2 (the Y direction in Fig. 11(c)). This caused the black PET to adhere to the resin layer. The resin layer was then peeled off from the double-sided tape.

Using the above procedure, a measurement sample after 20% stretch was obtained.

For resin layers that could not be stretched by 20%, the piece of black PET was not adhered, no images were taken (as described below), and no evaluations were performed.

(3) Image acquisition

The sample was placed on the measurement stage of a white light interference microscope (New View 7300, manufactured by Zygo) with the resin layer facing up, and the measurement sample was set so that it was fixed and in close contact with the measurement stage.

White light microscope images of the film surface were then acquired under the following measurement conditions. It is noted that a 50× objective lens was used for observation, with a magnification of 0.5× and a measurement range of 0.44 mm×0.44 mm.

<Measurement conditions>

Objective Lens: 50× Mirau [manufactured by Measurement Controls]
Acquisition Mode: Scan
Scan Type: Bipolar
Camera Mode: 992×992, 48 Hz
Subtract Sys Err: Off
AGC: Off
Phase Res: High
Connection Order: Location
Discon Action: Filter
Min Mod (%): 0.001
Min Area Size: 7
Scan Direction: Downward
Image Zoom: 0.5×
Remove Fringes: Off
Number of Averages: 0
FDA Noise Threshold: 10

Scan Length: 10 um bipolar
Extended Scan Length: 1000 $\mu$m
FDA Res: High 2G
Camera Resolution (interval per point): 0.219

(4) Surface roughness analysis

The images acquired in (3) were analyzed using MetroPro ver 9.0.10 Microscope Application and Advanced Texture Application under the following analysis conditions to measure Sa(0), $Sa_1(20)$, $Sa_2(20)$, and P. $\Delta Sa_1$ and $\Delta Sa_2$ were calculated from the obtained Sa(0), $Sa_1(20)$, and $Sa_2(20)$.

<Analysis Conditions>

<<Microscope Application>>

Removed: None
Trim: 0
Data Fill: On
Data Fill Max: 100
Filter: High Pass
Filter Low Wave len: 150 $\mu$m
Filter Type: Gauss Spline
Filter Trim: Off
Remove spikes: on
Spike Height (xRMS): 2.5
<<Advanced Texture Application>>
High FFT Filter: Off
Low FFT Filter: Off
Remove Spikes: Off
Noise Filter Size: 0
Noise Filter Type: 2 Sigma
Fill Data: Off
Trim: 0
Remove: Plane

The analysis of $\sigma/Sa'(0)$ was performed in accordance with the following procedure.
In the image acquired for the measurement sample before stretch, "Square" was selected in "Mask Editor," a mask was applied with a size of 0.06 mm, and a square mask of 0.06 mm$\times$0.06 mm was created by removing the background with "BG Excl." Then, the mask was set to "Move" mode and manually moved arbitrarily to measure Sa(0) in 20 areas within the image plane. It is noted that the 20 areas on the surface were selected so that they did not overlap.
The average value Sa'(0) and standard deviation $\sigma$ of Sa(0) of the 20 areas were calculated. $\sigma/Sa'(0)$ was calculated from the obtained Sa'(0) and $\sigma$.

(5) Evaluation of convex portion height

The image of the measurement sample before stretch was analyzed using the Advanced Texture Application under the above analysis conditions. In the "Peaks/Valleys" window, the "Peaks" (number of convex portions) when "Peak Lower Limit" was set to P/6 was N1, the "Peaks" (number of convex portions) when "Peak Lower Limit" was set to P/3 was N2, and the "Peaks" (number of convex portions) when "Peak Lower Limit" was set to P/2 was N3.
The above measurements and analyses were performed at nine areas for each measurement sample. The maximum and minimum values of the nine measurements were excluded, and the average value of the remaining seven measurements was calculated. The obtained average values are shown in Tables 1 and 2.

1-2. Tensile elongation at break

In accordance with JIS K 7127: 1999, five samples having a tensile direction in a first direction and five samples having a tensile direction in a second direction were cut from the sheets of Examples 1 to 4 and Comparative Examples 1 to 5. The sample shape was test piece type 2, with a width of 10 mm and a total length of 100 mm. The releasable base material or cover film was then peeled off from each sample to obtain a measurement sample.

Each measurement sample was mounted on a tensile testing machine (Tensilon universal testing machine RTC-1310A) with an initial chuck distance ($L_0$) of 50 mm. A tensile test was then performed under conditions of a measurement ambient temperature of 23°C and a test speed of 200 mm/min. The chuck distance L (mm) when the sample was broke was measured. The tensile elongation at break was calculated from $L_0$ and L. The average value of the five measurement samples was taken as the tensile elongation in the first direction and the tensile elongation at break in the second direction, respectively. The results are shown in Tables 1 and 2.

1-3. Total light transmittance, luminous reflectance, haze, and 60° gloss value

<Measurement sample before stretch>

A 50 mm×50 mm sample was cut from the sheets of Examples 1 to 4 and Comparative Examples 1 to 5. The releasable base material or cover film was peeled off from each sample.

For measurement of the luminous reflectance and 60° gloss value, the measurement sample were prepared by attaching a piece of black PET using the same process as in 1-1(1). For measurement of the total light transmittance and haze, samples that did not have a piece of black PET adhered thereto were used as a measurement sample.

<Measurement after stretch>

A 50 mm×50 mm sample was cut from the sheets of Examples 1 to 4 and Comparative Examples 1 to 5. Measurement samples with 20% stretch were prepared using the method described in 1-1(2). For measurement of the luminous reflectance and 60° gloss value, the sample was removed from the stretch jig to use as a measurement sample after the piece of black PET was adhered. For measurement of the total light transmittance and haze, samples that, in the method described in 1-1(2), had been stretched but did not have a piece of black PET adhered thereto were used as a measurement sample.

<Measurement>

A haze meter (HM-150, manufactured by Murakami Color Research Laboratory Co., Ltd.) was used to measure the total light transmittance (JIS K7361-1: 1997) and the haze (JIS K7136: 2000) of each measurement sample. The light incident surface during measurement was the surface with an uneven shape.

A spectral reflectance meter (trade name: UV-2600, manufactured by Shimadzu Corporation) was used to measure the luminous reflectance. The light incident surface during measurement was the surface with an uneven shape. The measuring device measures reflectance in the wavelength range of 380 nm or more and 780 nm or less at 0.5 nm intervals, and then converts the measured values into the brightness perceived by the human eye. The software is included in the measuring device. The software calculates reflectance under the conditions of a D65 light source and a viewing angle of 2 degrees.

A glossmeter (GM-26PRO, manufactured by Murakami Color Research Laboratory Co., Ltd.) was used to measure the 60° gloss of each measurement sample according to JIS Z8741: 1997. The light incident surface during measurement was the surface with the uneven shape.

The total light transmittance and haze after stretch were measured with the measurement sample still attached to the stretch jig.

The total light transmittance, luminous reflectance, haze, and 60° gloss value were measured at 16 areas on the surface of the measurement sample. The average value of the 14 measurements, excluding the maximum and minimum values of the measurements, was calculated and used as the total light transmittance, luminous reflectance, haze, and 60° gloss values of the films of the Examples and Comparative Examples. The results are shown in Tables 1 and 2.

2. Film preparation

[Example 1]

A release layer coating solution was prepared by mixing 5 parts by mass of polyvinyl alcohol (manufactured by Wako Pure Chemical Industries, Ltd., partially saponified, molecular weight: 3,500) and 95 parts by mass of pure water.

The release layer coating solution was applied on the flat surface of a polyethylene terephthalate film (trade name "Cosmoshine A4160", manufactured by Toyobo Co., Ltd., thickness 50 μm, size: 21.0 cm×29.7 cm) using a bar coater.

The film was then heated at 110°C for 2 minutes to prepare a releasable base material having a 4 μm-thick release layer made of polyvinyl alcohol formed thereon.

Resin Composition 1 was prepared according to the following formulation.

[Resin Composition 1]

- Bifunctional urethane acrylate oligomer (weight average molecular weight (Mw): 8,900): 80 parts by mass
- Triethylene glycol diacrylate (trade name "Light Acrylate 3EG-A", manufactured by Kyoeisha Chemical Co., Ltd.): 20 parts by mass
- Polymerization initiator (1-hydroxycyclohexyl phenyl ketone, trade name "Irgacure(R) 184", manufactured by BASF Japan Ltd.): 3 parts by mass
- Solvent (methyl isobutyl ketone): 400 parts by mass
- Leveling agent (polyether-modified polydimethylsiloxane, trade name "BYK-302," manufactured by BYK Corporation): 0.1 parts by mass

Resin Composition 1 used a bifunctional urethane acrylate oligomer derived from the following three components.

- Isocyanate unit: isophorone diisocyanate, 20% by mass
- Polyol unit: polyoxypropylene polyol (weight average molecular weight (Mw): 1000), 78% by mass
- Acrylate unit: hydroxyethyl acrylate, 2% by mass

The resin composition was applied on the release layer of the releasable base material (21.0 cm×29.7 cm: A4 size) using a bar coater to form a coated film. The coated film was then heated at 70°C for 1 minute to evaporate the solvent in the coated film and dry the film.

Next, the film was irradiated once with ultraviolet light using an excimer irradiation device (manufactured by M.D.COM. inc., MEIRA-MS-1-152-H2, wavelength: 172 nm) at a transport speed of 70 mm/sec, a voltage of 5.6 V, and an oxygen concentration of 200 ppm or less. The irradiation area was 15 cm×15 cm square. The irradiation cured only the surface of the coated film, to form wrinkles on the surface.

Next, the coated film was cured by irradiating the film with ultraviolet light using an ultraviolet irradiation device (manufactured by Fusion UV Systems Japan Co., Ltd., light source: H bulb), so that the cumulative light dose was 600 mJ/cm$^2$.

As a result of this step, a sheet of Example 1 having a resin layer with a thickness of 3 μm was obtained.

[Example 2]

A sheet of Example 2 having a resin layer with a thickness of 3 μm was obtained based on the same steps as in Example 1, except that resin composition 2 having the following formulation was used.

[Resin Composition 2]

- Bifunctional urethane acrylate oligomer (weight average molecular weight (Mw): 34,500): 60 parts by mass
- Triethylene glycol diacrylate (trade name "Light Acrylate 3EG-A", manufactured by Kyoeisha Chemical Co., Ltd.): 40 parts by mass
- Polymerization initiator (1-hydroxycyclohexyl phenyl ketone, trade name "Irgacure(R) 184", manufactured by BASF Japan Ltd.): 3 parts by mass
- Solvent (methyl isobutyl ketone): 400 parts by mass
- Leveling agent (polyether-modified polydimethylsiloxane, trade name "BYK-302," manufactured by BYK Corporation): 0.1 parts by mass

Resin Composition 2 used a bifunctional urethane acrylate oligomer derived from the following three components.

- Isocyanate unit: isophorone diisocyanate, 5% by mass

- Polyol unit: polyoxypropylene polyol (weight average molecular weight (Mw): 4,650), 94% by mass
- Acrylate unit: hydroxyethyl acrylate, 1% by mass

[Example 3]

A sheet of Example 3 having a resin layer with a thickness of 15 μm was obtained based on the same steps as in Example 1, except that resin composition 3 having the following formulation was used and the step of drying the coated film was not performed.

[Resin Composition 3]

- Bifunctional urethane acrylate oligomer (same as resin composition 1): 50 parts by mass
- Acryloylmorpholine (trade name "ACMO", manufactured by KJ Chemicals Co., Ltd.): 50 parts by mass
- Polymerization initiator (1-hydroxycyclohexyl phenyl ketone, trade name "Irgacure(R) 184", manufactured by BASF Japan Ltd.): 3 parts by mass
- Leveling agent (polyether-modified polydimethylsiloxane, trade name "BYK-302," manufactured by BYK Corporation): 0.1 parts by mass

[Example 4]

A sheet of Example 4 having a resin layer with a thickness of 3 μm was obtained based on the same steps as in Example 1, except that resin composition 4 having the following formulation was used.

[Resin Composition 4]

- Bifunctional urethane acrylate oligomer (weight average molecular weight (Mw): 11,000): 95 parts by mass
- Acryloylmorpholine (trade name "ACMO", manufactured by KJ Chemicals Co., Ltd.): 5 parts by mass
- Polymerization initiator (1-hydroxycyclohexyl phenyl ketone, trade name "Irgacure(R) 184", manufactured by BASF Japan Ltd.): 3 parts by mass
- Solvent (methyl isobutyl ketone): 400 parts by mass
- Leveling agent (perfluoropolyether-containing acrylate, trade name "X-71-1203M", manufactured by Shin-Etsu Chemical Co., Ltd.): 0.1 parts by mass

Resin Composition 4 used a bifunctional urethane acrylate oligomer derived from the following three components.

- Isocyanate unit: isophorone diisocyanate, 19% by mass
- Polyol unit: polyoxypropylene polyol (weight average molecular weight (Mw): 1,000), 79% by mass
- Acrylate unit: hydroxyethyl acrylate, 2% by mass

[Comparative Example 1]

A thin film dressing (product name: "Yuhada Permirole Lite," manufactured by Nitoms, Inc., size: 10.0 cm×30.0 cm) was prepared, and the cover film was peeled off. The cover film was a shaped sheet.
Resin Composition 1 was applied on the thin film dressing surface of the cover film using a bar coater to form a coated film. The solvent in the coated film was then evaporated by heating at 70°C for 1 minute.
Next, the coated film was cured by irradiating the film with ultraviolet light using an ultraviolet irradiation device (manufactured by Fusion UV Systems Japan Co., Ltd., light source: H bulb) so that the cumulative light dose was 600 mJ/cm$^2$. As a result, a sheet of Comparative Example 1 consisting of a resin layer having a thickness of 28 μm was obtained.

[Comparative Example 2]

Resin composition 5 having the following formulation was obtained.

[Resin Composition 5]

- Bifunctional urethane acrylate oligomer (same as resin composition 1): 80 parts by mass
- Triethylene glycol diacrylate (trade name "Light Acrylate 3EG-A", manufactured by Kyoeisha Chemical Co., Ltd.): 20 parts by mass
- Silica particles (Fuji Silysia Chemical Ltd., gel-method amorphous silica, average particle size: 2.7 $\mu$m): 80 parts by mass
- Polymerization initiator (1-hydroxycyclohexyl phenyl ketone, trade name "Irgacure(R) 184", manufactured by BASF Japan Ltd.): 3 parts by mass
- Methyl isobutyl ketone: 400 parts by mass
- Leveling agent (polyether-modified polydimethylsiloxane, trade name "BYK-302," manufactured by BYK Corporation): 0.1 parts by mass

Resin composition 5 was applied on the flat surface of a polyethylene terephthalate film (trade name "Cosmoshine A4160", manufactured by Toyobo Co., Ltd., thickness 50 $\mu$m, size: 21.0 cm$\times$29.7 cm: A4 size) using a bar coater to form a coated film. The coated film was then heated at 70°C for 1 minute to evaporate the solvent in the coated film.
Next, the coated film was cured by irradiating the film with ultraviolet light using an ultraviolet irradiation device (manufactured by Fusion UV Systems Japan Co., Ltd., light source: H bulb) so that the cumulative light dose was 600 mJ/cm$^2$. As a result, a sheet of Comparative Example 2 having a resin layer with a thickness of 5.5 $\mu$m was obtained.

[Comparative Example 3]

A sheet of Comparative Example 3 having a resin layer with a thickness of 3 $\mu$m was obtained based on the same steps as in Example 1, except that resin composition 6 having the following formulation was used.

[Resin Composition 6]

- Bifunctional urethane acrylate oligomer (weight average molecular weight (Mw): 3,500): 80 parts by mass
- Triethylene glycol diacrylate (trade name "Light Acrylate 3EG-A", manufactured by Kyoeisha Chemical Co., Ltd.): 20 parts by mass
- Polymerization initiator (1-hydroxycyclohexyl phenyl ketone, trade name "Irgacure(R) 184", manufactured by BASF Japan Ltd.): 3 parts by mass
- Solvent (methyl isobutyl ketone): 400 parts by mass
- Leveling agent (polyether-modified polydimethylsiloxane, trade name "BYK-302," manufactured by BYK Corporation): 0.1 parts by mass

Resin Composition 6 used a bifunctional urethane acrylate oligomer derived from the following three components.

- Isocyanate unit: isophorone diisocyanate, 37% by mass
- Polyol unit: polyoxypropylene polyol (weight average molecular weight (Mw): 400), 56% by mass
- Acrylate unit: hydroxyethyl acrylate, 7% by mass

[Comparative Example 4]

A sheet of Comparative Example 4 having a resin layer with a thickness of 3 $\mu$m was obtained based on the same steps as in Example 1, except that resin composition 7 having the following formulation was used.

[Resin Composition 7]

- Bifunctional urethane acrylate oligomer (same as resin composition 1): 70 parts by mass
- Pentaerythritol triacrylate (product name "KAYARAD PET-30", manufactured by Nippon Kayaku Co., Ltd.): 30 parts by mass
- Polymerization initiator (1-hydroxycyclohexyl phenyl ketone, trade name "Irgacure(R) 184", manufactured by BASF Japan Ltd.): 3 parts by mass
- Solvent (methyl isobutyl ketone): 400 parts by mass
- Leveling agent (polyether-modified polydimethylsiloxane, trade name "BYK-302," manufactured by BYK Corporation): 0.1 parts by mass

[Comparative Example 5]

A sheet of Comparative Example 5 having a resin layer with a thickness of 3 μm was obtained based on the same steps as in Example 1, except that resin composition 8 having the following formulation was used.

[Resin Composition 8]

- Bifunctional urethane acrylate oligomer (same as resin composition 1): 40 parts by mass
- Triethylene glycol diacrylate (trade name "Light Acrylate 3EG-A", manufactured by Kyoeisha Chemical Co., Ltd.): 60 parts by mass
- Polymerization initiator (1-hydroxycyclohexyl phenyl ketone, trade name "Irgacure(R) 184", manufactured by BASF Japan Ltd.): 3 parts by mass
- Solvent (methyl isobutyl ketone): 400 parts by mass
- Leveling agent (polyether-modified polydimethylsiloxane, trade name "BYK-302," manufactured by BYK Corporation): 0.1 parts by mass

3. Results

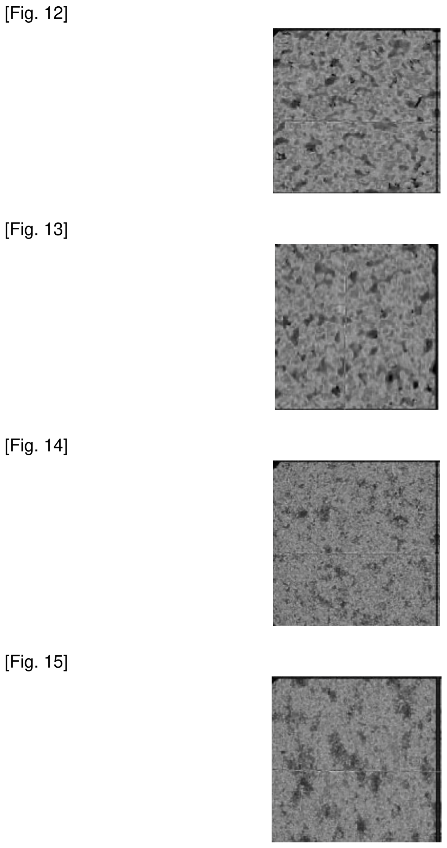

Fig. 12 and Fig. 13 show white light interference microscope photographs of the surface having an uneven shape in Comparative Example 1. Fig. 12 shows the image before stretch, and Fig. 13 shows the image after 20% stretch in the vertical direction of the image.

Fig. 14 and Fig. 15 show white light interference microscope photographs of the surface having an uneven shape in Comparative Example 2. Fig. 14 shows the image before stretch, and Fig. 15 shows the image after 20% stretch in the vertical direction of the image.

[Table 1]

|  | Example 1 | Example 2 | Example 3 | Example 4 |
|---|---|---|---|---|
| $Sa(0)$ (μm) | 1.04 | 1.47 | 2.22 | 0.56 |
| $Sa_1(20)$ (μm) | 0.86 | 1.17 | 1.82 | 0.45 |
| $Sa_2(20)$ (μm) | 0.81 | 1.16 | 1.76 | 0.47 |
| $\Delta Sa_1$ (%) | -17.3 | -20.4 | -18.0 | -19.6 |
| $\Delta Sa_2$ (%) | -22.1 | -21.1 | -20.7 | -16.1 |
| $\lvert \Delta Sa_1 - \Delta Sa_2 \rvert$ (%) | 4.8 | 0.7 | 2.7 | 3.6 |
| $Sa'(0)$ (μm) | 0.99 | 1.42 | 2.15 | 0.45 |
| $\sigma$ (μm) | 0.08 | 0.14 | 0.16 | 0.03 |
| $\sigma/Sa'(0)$ (%) | 8.1 | 9.9 | 7.4 | 6.7 |
| $P$ (μm) | 3.95 | 6.75 | 17.45 | 4.92 |
| N1 (number) | 2777 | 3743 | 1052 | 4471 |
| N2 (number) | 3323 | 1920 | 927 | 2764 |
| N3 (number) | 1138 | 980 | 698 | 1410 |
| N2/N1 | 1.20 | 0.51 | 0.88 | 0.62 |
| N3/N1 | 0.41 | 0.26 | 0.66 | 0.32 |

(continued)

| | | Example 1 | Example 2 | Example 3 | Example 4 |
|---|---|---|---|---|---|
| Tensile elongation at break (%) | First direction | 98 | 120 | 106 | 106 |
| | Second direction | 82 | 113 | 110 | 98 |
| Total light transmittance (%) | Before stretch | 92.2 | 91.5 | 93.9 | 92.1 |
| | After stretch | 92.1 | 91.5 | 93.9 | 92.0 |
| Luminous reflectance (%) | Before stretch | 4.2 | 4.1 | 4.1 | 4.0 |
| | After stretch | 4.1 | 4.0 | 4.1 | 4.0 |
| Haze (%) | Before stretch | 83.8 | 90.6 | 95.5 | 74.0 |
| | After stretch | 81.9 | 88.5 | 94.0 | 71.9 |
| 60° Gloss value | Before stretch | 2.9 | 1.1 | 0.6 | 4.3 |
| | After stretch | 4.3 | 1.8 | 0.9 | 5.5 |

[Table 2]

Table 2

| | | Comparative Example 1 | Comparative Example 2 | Comparative Example 3 | Comparative Example 4 | Comparative Example 5 |
|---|---|---|---|---|---|---|
| $Sa(0)$ ($\mu$m) | | 0.98 | 0.49 | 0.86 | 1.03 | 0.79 |
| $Sa_1(20)$ ($\mu$m) | | 0.92 | 0.58 | - | - | - |
| $Sa_2(20)$ ($\mu$m) | | 0.95 | 0.47 | - | - | - |
| $\Delta Sa_1$ (%) | | -6.1 | 18.4 | - | - | - |
| $\Delta Sa_2$ (%) | | -3.1 | -4.1 | - | - | - |
| $\|\Delta Sa_1 - \Delta Sa_2\|$ (%) | | 3.1 | 22.4 | - | - | - |
| $Sa'(0)$ ($\mu$m) | | 0.73 | 0.43 | 0.85 | 0.98 | 0.72 |
| $\sigma$ ($\mu$m) | | 0.12 | 0.04 | 0.07 | 0.04 | 0.07 |
| $\sigma/Sa'(0)$ (%) | | 16.4 | 9.3 | 8.2 | 4.1 | 9.7 |
| $P$ ($\mu$m) | | 4.00 | 4.78 | 4.02 | 3.86 | 4.32 |
| $N1$ (number) | | 1990 | >10000 | 1982 | 2651 | 2348 |
| $N2$ (number) | | 1613 | 9653 | 1032 | 2301 | 1984 |
| $N3$ (number) | | 477 | 4527 | 860 | 1301 | 1003 |
| $N2/N1$ | | 0.81 | - | 0.52 | 0.87 | 0.84 |
| $N3/N1$ | | 0.24 | - | 0.43 | 0.49 | 0.43 |
| Tensile elongation at break (%) | First direction | 75 | 55 | 11 | 8 | 18 |
| | Second direction | 88 | 46 | 12 | 8 | 13 |
| Total light transmittance (%) | Before stretch | 91.4 | 92.2 | 92.3 | 92.6 | 92.5 |
| | After stretch | 91.1 | 92.2 | - | - | - |

(continued)

|  | | Comparative Example 1 | Comparative Example 2 | Comparative Example 3 | Comparative Example 4 | Comparative Example 5 |
|---|---|---|---|---|---|---|
| Luminous reflectance (%) | Before stretch | 4.3 | 4.1 | 4.2 | 4.1 | 4.2 |
| | After stretch | 4.2 | 4.0 | - | - | - |
| Haze (%) | Before stretch | 73.1 | 76.8 | 82.5 | 83.1 | 76.5 |
| | After stretch | 66.4 | 75.9 | - | - | - |
| 60° Gloss value | Before stretch | 4.2 | 1.9 | 3.2 | 3.0 | 4.0 |
| | After stretch | 5.2 | 2.1 | - | - | - |

As described above, it can be seen that Example 1 has an uneven shape due to tiny wrinkles on the surface.

It can be seen that Comparative Examples 1 and 2 have dot-shaped convex portions formed on the surface. The size and density of the individual dot-shaped convex portions in Comparative Example 1 tended to be larger than in Comparative Example 2.

In Example 1, both $\Delta Sa_1$ and $\Delta Sa_2$ were -15.0% or less. The tensile elongation at break was 98% in the first direction and 82% in the second direction, demonstrating excellent stretchability. Further, in Example 1, $|\Delta Sa_1-\Delta Sa_2|$ was small, meaning that the film could be stretched approximately evenly in both the first and second directions. As shown in the images in Figs. 3 and 4, a change in the distribution of the convex portions was observed in Example 1.

In contrast, in Comparative Example 1, both $\Delta Sa_1$ and $\Delta Sa_2$ were high. Referring to the images in Figs. 12 and 13, there was almost no change in the distribution of the convex portions.

In Comparative Example 2, $\Delta Sa_1$ was a positive (+) value. This is thought to be because the silica particles became more apparent due to the pulling, increasing the undulations caused by the silica particles. Referring to the images in Figs. 14 and 15, it appears that the convex portions are larger. Further, despite the resin portion of Comparative Example 2 using the same material as in Example 1, the tensile elongation at break was a low value.

These results suggest that the film of Example 1 stretches due to the material of the resin layer, and the expansion of the convex portions of the wrinkles also contributes to stretchability.

The $\sigma/Sa'(0)$ of Example 1 is smaller than that of Comparative Examples 1 and 2. It can be thus understood that in Example 1 the wrinkles (convex portions) are uniformly distributed on the surface.

In Example 1, N2/N1 and N3/N1 satisfy conditions 1 and 2, it can be thus understood that the height of the convex portions is more uniform.

On the other hand, although N2/N1 is high in Comparative Example 1, N3/N1 is very low, which means that the uniformity of the height of the convex portions is inferior to that of Example 1.

In Comparative Example 2, N1 exceeded the detection limit (10,000 particles), so an accurate value could not be obtained. For this reason, N2/N1 and N3/N1 were not calculated. A large N1 means that there are many convex portions present in the same area. Since the convex portions are due to the silica particles, it can be understood that in Comparative Example 2, the influence of the silica particles resulted in a large $\Delta Sa_1$ and $\Delta Sa_2$ and a low tensile elongation at break.

Similarly, in Examples 2 to 4, both $\Delta Sa_1$ and $\Delta Sa_2$ were -15.0% or less, and the tensile elongation at break in both the first and second directions was high. Further, in Examples 2 to 4, $|\Delta Sa_1-\Delta Sa_2|$ was small, meaning that the film could be stretched approximately evenly in both the first and second directions. It can be understood that $\sigma/Sa'(0)$ was also small in Examples 2 to 4, and the wrinkles (convex portions) were uniformly distributed on the surface. Further, in all of Examples 2 to 4, N2/N1 and N3/N1 satisfied conditions 1 and 2, and it can be understood that the height of the convex portions was more uniform.

In all of Comparative Examples 3 to 5, the tensile elongation at break was 20% or less. Therefore, evaluation at a 20% stretch was not possible.

In Comparative Example 3, compared to Example 1, the polyol units in the bifunctional urethane acrylate oligomer were shorter and the proportion of polyol units to isocyanate units was lower. For this reason, it is believed that the resin layer could not be imparted with sufficient flexibility, resulting in the low tensile elongation at break.

In Comparative Example 4, it is thought that the addition of a trifunctional acrylate (polymerizable monomer) to the resin composition hardened the resin layer, making it impossible to impart sufficient flexibility, resulting in the low tensile elongation at break.

In Comparative Example 5, compared to Example 1, it is thought that the ratio of the bifunctional urethane acrylate oligomer was lower and a larger amount of (polymerizable monomer) was blended, making it impossible to impart sufficient flexibility to the resin layer, resulting in the low tensile elongation at break.

A 50 mm×50 mm sample was cut from each example sheet. The releasable base material was peeled off from each sample and attached to a small-size Bioskin plate (manufactured by Beaulux Co., Ltd., No. 64, #Biocolor (BCB)). At this time, the peeled surface of each sample was brought into contact with the Bioskin plate.

Ten subjects evaluated the visibility of the samples under illumination (illuminance: 750 1x) of a white LED (color temperature: 5000 K). As a result, for each example, eight or more subjects evaluated that the boundary between the Bioskin plate and the sample was inconspicuous.

Reference Signs List

    10 stretchable film
    12, 22, 32, 42 resin layer
    14 convex portion
    16 concave portion
    20, 30, 40 multilayer body
    24, 44 adhesive layer
    36, 46 functional layer
    100 stretch jig
    102-1, 102-2 support parts
    104a, 104b, 104c male screw
    106-1, 106-2, 106-3 nut
    108 double-sided tape
    110 resin layer

## Claims

1. A stretchable film having an uneven shape on at least one surface, wherein

    a tensile elongation at break in a first direction, which is an arbitrary direction within a plane of the film, is more than 20%, and the tensile elongation at break in a second direction perpendicular to the first direction is more than 20%, when a 0.44 mm square area of the surface having an uneven shape is observed using a white light interference microscope, and a surface roughness measured in accordance with ISO 25178:2012 before stretch is defined as $Sa(0)$, the surface roughness measured in accordance with ISO 25178:2012 after 20% stretch in the first direction is defined as $Sa_1(20)$, and the surface roughness measured in accordance with ISO 25178:2012 after 20% stretch in the second direction is defined as $Sa_2(20)$, a rate of change in surface roughness in the first direction, $\Delta Sa_1$, expressed by the following formula (1), is -15.0% or less, and the rate of change in surface roughness in the second direction, $\Delta Sa_2$, expressed by the following formula (2), is -15.0% or less.

$$\Delta Sa_1 \ (unit: \%) = (Sa_1(20) - Sa(0))/Sa(0) \times 100 \ (1)$$

$$\Delta Sa_2 \ (unit: \%) = (Sa_2(20) - Sa(0))/Sa(0) \times 100 \ (2)$$

2. The stretchable film according to claim 1, wherein an absolute value of a difference between $\Delta Sa_1$ and $\Delta Sa_2$, $|\Delta Sa_1 - \Delta Sa_2|$, is 10.0% or less.

3. The stretchable film according to claim 1 or 2, wherein $Sa(0)$ is 0.05 $\mu$m or more and 5.0 $\mu$m or less.

4. The stretchable film according to claim 1 or 2, wherein when 20 non-overlapping 0.06 mm square subareas are arbitrarily selected from a 0.44 mm square observation area observed using a white light interference microscope, and an average value of surface roughness measured in accordance with ISO 25178:2012 of each of the 20 subareas is defined as Sa'(0) and a standard deviation of the surface roughness of the 20 subareas is defined as σ, a coefficient of variation calculated using the following formula (3) is preferably 10.0% or less.

$$\text{Coefficient of variation} = (\sigma/\text{Sa'}(0)) \times 100 \ (3)$$

5. The stretchable film according to claim 1 or 2, wherein in terms of heights in a 0.44 mm square area of the surface having an uneven shape observed using a white light interference microscope, a maximum peak height is defined as P ($\mu$m), a surface having a height obtained by adding P/6 to the average height is defined as a first reference plane, a number of convex portions higher than the first reference plane is defined as N1, a surface having a height obtained by adding P/3 to the average height is defined as a second reference plane, a number of convex portions higher than the second reference plane is defined as N2, a surface having a height obtained by adding P/2 to the average height is defined as a third reference plane, and a number of convex portions higher than the third reference plane is defined as N3, the following conditions 1 and 2 are satisfied.

$$\text{<Condition 1>}$$

$$0.50 \leq \text{N2/N1} \leq 1.50$$

$$\text{<Condition 2>}$$

$$0.25 \leq \text{N3/N1} \leq 1.00$$

6. The stretchable film according to claim 5, wherein N1 is 500 or more and 10,000 or less.

7. A multilayer body comprising the stretchable film according to claim 1 or 2 and an adhesive layer provided on the surface of the film opposite to the surface having an uneven shape.

8. A multilayer body comprising the stretchable film according to claim 1 or 2 and a functional layer provided on the surface of the stretchable film having an uneven shape.

9. A hygiene product comprising the stretchable film according to claim 1 or 2.

10. A cosmetic comprising the stretchable film according to claim 1 or 2.

11. An image display device comprising the stretchable film according to claim 1 or 2.

12. A hygiene product comprising the multilayer body according to claim 7.

13. A cosmetic comprising the multilayer body according to claim 7.

14. An image display device comprising the multilayer body according to claim 7.

[Fig. 1]

[Fig. 2]

[Fig. 3]

[Fig. 4]

[Fig. 5]

20

22

24

[Fig. 6]

30

36

32

[Fig. 7]

40

46

42

44

[Fig. 8]

[Fig. 9]

[Fig. 10]

[Fig. 11]

(a)

(b)

(c)

[Fig. 12]

[Fig. 13]

[Fig. 14]

[Fig. 15]

## INTERNATIONAL SEARCH REPORT

| International application No. |
| --- |
| **PCT/JP2024/018241** |

### A. CLASSIFICATION OF SUBJECT MATTER

**B29C 59/16**(2006.01)i; **B29C 59/18**(2006.01)i; **B32B 7/022**(2019.01)i; **B32B 27/00**(2006.01)i
FI:  B29C59/16; B32B7/022; B32B27/00 M; B29C59/18

According to International Patent Classification (IPC) or to both national classification and IPC

### B. FIELDS SEARCHED

Minimum documentation searched (classification system followed by classification symbols)

B29C59/16; B29C59/18; B32B1/00-43/00; C08J5/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2022-25622 A (MITSUBISHI CHEMICAL CORPORATION) 10 February 2022 (2022-02-10) entire text, all drawings | 1-14 |
| A | JP 2022-61031 A (DAI NIPPON PRINTING CO., LTD.) 15 April 2022 (2022-04-15) entire text, all drawings | 1-14 |
| A | JP 2022-48110 A (DAI NIPPON PRINTING CO., LTD.) 25 March 2022 (2022-03-25) entire text, all drawings | 1-14 |
| A | JP 2020-126926 A (DAI NIPPON PRINTING CO., LTD.) 20 August 2020 (2020-08-20) entire text, all drawings | 1-14 |
| A | JP 2017-206626 A (SHIN-ETSU CHEMICAL CO., LTD.) 24 November 2017 (2017-11-24) entire text, all drawings | 1-14 |
| A | CN 113808780 A (DONGHUA UNIVERSITY) 17 December 2021 (2021-12-17) entire text, all drawings | 1-14 |

☑ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **20 June 2024** | **30 July 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

34

**INTERNATIONAL SEARCH REPORT**

| International application No. |
| --- |
| **PCT/JP2024/018241** |

### C.    DOCUMENTS CONSIDERED TO BE RELEVANT

| Category* | Citation of document, with indication, where appropriate, of the relevant passages | Relevant to claim No. |
| --- | --- | --- |
| A | US 2023/0050906 A1 (THE REGENTS OF THE UNIVERSITY OF CALIFORNIA) 16 February 2023 (2023-02-16) <br> entire text, all drawings | 1-14 |

Form PCT/ISA/210 (second sheet) (July 2022)

## INTERNATIONAL SEARCH REPORT
### Information on patent family members

International application No.

**PCT/JP2024/018241**

| Patent document cited in search report | | | Publication date (day/month/year) | Patent family member(s) | | | Publication date (day/month/year) |
|---|---|---|---|---|---|---|---|
| JP | 2022-25622 | A | 10 February 2022 | (Family: none) | | | |
| JP | 2022-61031 | A | 15 April 2022 | US | 2023/0364640 | A1 | |
| | | | | WO | 2022/054645 | A1 | |
| | | | | EP | 4212579 | A1 | |
| | | | | CN | 116323766 | A | |
| JP | 2022-48110 | A | 25 March 2022 | WO | 2022/054644 | A1 | |
| JP | 2020-126926 | A | 20 August 2020 | (Family: none) | | | |
| JP | 2017-206626 | A | 24 November 2017 | US | 2017/0335076 | A1 | |
| | | | | KR | 10-2017-0131248 | A | |
| | | | | TW | 201809039 | A | |
| CN | 113808780 | A | 17 December 2021 | (Family: none) | | | |
| US | 2023/0050906 | A1 | 16 February 2023 | WO | 2021/142121 | A1 | |

Form PCT/ISA/210 (patent family annex) (July 2022)

**REFERENCES CITED IN THE DESCRIPTION**

**Patent documents cited in the description**

- JP 2021116405 A
- JP 2015210273 A
- JP 2023048729 A